(19) Europäisches Patentamt
European Patent Office
Office européen des brevets

(11) EP 3 575 442 B1

(12) EUROPEAN PATENT SPECIFICATION

(45) Date of publication and mention
of the grant of the patent:
**20.01.2021 Bulletin 2021/03**

(51) Int Cl.:
*C25B 1/10* (2006.01)   *C25B 9/20* (2006.01)
*C25B 11/03* (2021.01)   *C25B 13/02* (2006.01)

(21) Application number: **18744656.2**

(22) Date of filing: **26.01.2018**

(86) International application number:
**PCT/JP2018/002581**

(87) International publication number:
**WO 2018/139610 (02.08.2018 Gazette 2018/31)**

(54) **BIPOLAR ELECTROLYZER FOR ALKALINE WATER ELECTROLYSIS, AND HYDROGEN PRODUCTION METHOD**

BIPOLARER ELEKTROLYSEUR FÜR ALKALISCHE WASSERELEKTROLYSE, UND VERFAHREN ZUR HERSTELLUNG VON WASSERSTOFF

ÉLECTROLYSEUR BIPOLAIRE POUR ÉLECTROLYSE D'EAU ALCALINE, ET PROCÉDÉ DE PRODUCTION D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017   JP 2017012552**
**26.01.2017   JP 2017012553**

(43) Date of publication of application:
**04.12.2019 Bulletin 2019/49**

(73) Proprietor: **ASAHI KASEI KABUSHIKI KAISHA**
**Tokyo 100-0006 (JP)**

(72) Inventors:
• **SUZUKI Yusuke**
**Tokyo 100-0006 (JP)**
• **HIRANO Toshiyuki**
**Tokyo 100-0006 (JP)**
• **NAKAJIMA Yasuhiro**
**Tokyo 100-0006 (JP)**
• **UCHINO Yousuke**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**WO-A1-2016/148302      JP-A- 2011 117 056**
**JP-A- 2015 183 254      US-A1- 2016 289 850**

**Description**

TECHNICAL FIELD

The present disclosure relates to a bipolar electrolyzer for alkaline water electrolysis, and a hydrogen production method.

BACKGROUND

In recent years, techniques utilizing renewable energy, such as wind power and solar power, have attracted attention in order to address the issues including global warming due to greenhouse gases such as carbon dioxide, decrease of fossil fuel reserves, and so on.

The nature of renewable energy is that it is subject to very large fluctuation as its output depends on climatic conditions. It is thus not always possible to transport electric power obtained by electricity generation by renewable energy (hereinafter also referred to as "variable power source") to the general electric power system, and there is concern about social influences such as imbalance of electricity supply and demand, destabilization of electric power system, and so on. In addition, the imbalance of supply of electric power generated from renewable energies and power demand arises within a day, as well as seasonal variations in the imbalance.

Therefore, research is being conducted to convert the electric power generated from renewable energy into a form suitable for storage and transportation for utilization. Specifically, study has been made on how to generate storable and transportable hydrogen by electrolysis of water using electric power generated from renewable energy, and to use generated hydrogen as an energy source or material.

Hydrogen is widely used industrially in the fields of, for example, petroleum refining, chemical synthesis, and metal refining, and in recent years it can be used in many scenes such as in hydrogen stations for fuel cell vehicles (FCVs), smart communities, and hydrogen power plants. Accordingly, there is high expectation for the development of technology to obtain, in particular, highly-pure hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis devices.

However, for adaptation of alkaline water electrolysis as a means for storing and transporting energy, it is necessary to make it possible to conduct water electrolysis efficiently and stably using electric power with large fluctuation in output as described above During a conversion of electric power into hydrogen for storage, if there is an imbalance between supply and demand of electric power as described above, particularly if the supply of electric power significantly exceeds the demand for electric power, a large amount of electric power flows into a water electrolysis device. In such a situation, when the current density per electrolysis cell unit area soars, the conversion efficiency and the purity of hydrogen significantly deteriorate in conventional alkali electrolysis devices. In addition to the deterioration of the electric power consumption rate of a hydrogen production, the concentrations of oxygen in generated hydrogen and the concentration of hydrogen in generated oxygen also increase, which may cause increased purification losses. Under such circumstances, in order to accommodate to large current, an extension of the capacity of the water electrolysis devices is inevitable, requiring capital investments, which negatively affects the profitability.

In order to address the issue of improving the electric power consumption rate for hydrogen production by suppressing the bath voltage in alkaline water electrolysis, it is known to be effective to use a structure in which the gap between the membrane and the electrodes is substantially eliminated, which is called a zero-gap structure, as the structure of the electrolytic cell (see US4530743A [PTL 1] and JPS59-173281A [PTL 2]). With the zero-gap structure, by rapidly escaping the generated gas through the pores of an electrode to the side opposite to the membrane side of the electrode, it is possible to reduce the distance between the electrodes while minimizing gas accumulation near the electrodes, thereby keeping bath voltage low. The zero-gap structure is very effective in suppressing bath voltage and is adopted in various electrolysis devices.

In addition to the optimization of the structure of electrolysis cells, in recent years, in order to enable efficient and stable alkaline water electrolysis, investigations have been conducted actively to deal with above-mentioned problems by optimizing electrodes and membranes (see WO2013/191140 [PTL 3] and JP2015-117417A [PTL 4]).

WO 2016/148302, JP 2015-183254, US 2016/289850 and JP 2011-117056 disclose bipolar electrolyzers for alkaline water electrolysis comprising a plurality of combinations of an anode, a cathode, and a membrane disposed between the anode and the cathode.

WO 2016/148302 and JP 2011-117056 membrane preparation of the present examples, i.e. inherently providing further disclosed that the membrane is a porous membrane containing inorganic particles having an average primary grain size of 20 nm or more and 300 nm or less.

JP 2015-183254 and US 2016/289850 further disclose that at least one of the anode or the cathode is a porous electrode having an average pore size of 10 nm or more and 200 nm or less.

CITATION LIST

Patent Literature

PTL 1: US4530743A
PTL 2: JPS59-173281A
PTL 3: WO2013/191140
PTL 4: JP2015-117417A

SUMMARY

(Technical Problem)

It would thus be helpful to provide an electrolysis device capable of suppressing reductions in the conversion efficiency and the purity of hydrogen even during high current density operations.

(Solution to Problem)

In order to solve the above-identified issues, we have intensively studied electrodes and membranes. Surprisingly, we have found that the reductions in the electrolysis efficiency and the purities of generated gases can be suppressed by controlling the average pore size of pores in porous electrodes and the average primary grain size of inorganic particles contained in porous membranes to certain ranges, even during high current density operations, thereby completing the present disclosure.
The subject matter of the present disclosure is as follows:

(1) A bipolar electrolyzer for alkaline water electrolysis being a bipolar electrolyzer comprising:

a plurality of combinations an anode, a cathode, and a membrane disposed between the anode and the cathode, wherein at least one of the anode or the cathode is a porous electrode having an average pore size, determined as described in the description, of 10 nm or more and 200 nm or less, and
the membrane is a porous membrane containing inorganic particles having an average primary grain size, determined as described in the description, of 20 nm or more and 300 nm or less.

(2) The bipolar electrolyzer for alkaline water electrolysis according to (1), wherein the inorganic particles contained in the membrane have the average primary grain size, determined as described in the description, of 50 nm or more and 180 nm or less.
(3) The bipolar electrolyzer for alkaline water electrolysis according to (1) or (2), wherein the porous electrode comprises a substrate and a catalyst layer formed on a surface of the substrate.
(4) The bipolar electrolyzer for alkaline water electrolysis according to (3), wherein the porous electrode comprises the substrate in a net structure and the catalyst layer containing Ni.
(5) The bipolar electrolyzer for alkaline water electrolysis according to any one of (1) to (4), wherein the porous electrode has a double layer capacitance, determined as described in the description, of 0.5 F/cm$^2$ or more and 4.0 F/cm$^2$ or less.
(6) The bipolar electrolyzer for alkaline water electrolysis according to any one of (1) to (5), wherein the water contact angle to the porous electrode, determined as described in the description, is more than 0 and 30 or less.
(7) The bipolar electrolyzer for alkaline water electrolysis according to any one of (1) to (6), wherein the porous electrode has a surface aperture ratio, determined as described in the description, of 30% or more and 80% or less.
(8) The bipolar electrolyzer for alkaline water electrolysis according to any one of (3) to (7), wherein the porous electrode comprises a plain weave mesh substrate having a mesh opening, determined as described in the description, of 0.2 mm or more and 4.0 mm or less.
(9) The bipolar electrolyzer for alkaline water electrolysis according to any one of (3) to (7), wherein the porous electrode comprises an expanded substrate having a center-to-center distance in the long-way direction of mesh (LW) of 2.0 mm or more and 6.0 mm or less, and a center-to-center distance in the short way of mesh (SW) of 1.0 mm or more and 5.0 mm or less,
wherein the "center-to-center distance in the long way of mesh (LW)" refers to the longest distance between the centers of adjacent bonds (mesh crossings), when observed from the direction orthogonal to the plane of the opening, and

wherein the "center-to-center distance in the short way of mesh (SW)" refers to the shortest distance between the centers of bonds adjacent in the direction orthogonal to the LW, when observed from the direction orthogonal to the plane of the opening.

(10) The bipolar electrolyzer for alkaline water electrolysis according to any one of (3) to (7), wherein the porous electrode comprises a punching substrate having a hole size (D) of 1.0 mm or more and 10.0 mm or less, and a hole-to-hole pitch (P) of 1.0 mm or more and 12.0 mm,
wherein the "hole size (D)" refers to the diameter when punched holes are perfect circular, or as the average of the major- and the minor-axis diameters when the punched holes are elliptic, and
the "hole-to-hole pitch (P)" refers to the center-to-center distance between one punched hole and the closest punched hole.

(11) The bipolar electrolyzer for alkaline water electrolysis according to any one of (1) to (10), wherein the inorganic particles contained in the membrane have an average secondary grain size, determined as described in the description, of 0.2 $\mu$m or more and 10.0 $\mu$m or less.

(12) The bipolar electrolyzer for alkaline water electrolysis according to any one of (1) to (11), wherein the inorganic particles contained in the membrane contain zirconium oxide ($ZrO_2$) and/or titanium oxide ($TiO_2$).

(13) The bipolar electrolyzer for alkaline water electrolysis according to any one of (1) to (12), wherein the membrane has an average water permeation pore size, determined as described in the description, of 0.1 $\mu$m or more and 1.0 $\mu$m or less

(14) The bipolar electrolyzer for alkaline water electrolysis according to any one of (1) to (13), wherein the membrane has a maximum pore size, determined as described in the description, of 0.5 $\mu$m or more and 3.0 $\mu$m or less.

(15) The bipolar electrolyzer for alkaline water electrolysis according to any one of (1) to (14), wherein the membrane has a surface aperture ratio, determined as described in the description, of 20% or more and 80% or less.

(16) The bipolar electrolyzer for alkaline water electrolysis according to any one of (1) to (15), wherein the water contact angle to the membrane, determined as described in the description, is 30 or more and 90 or less.

(17) The bipolar electrolyzer for alkaline water electrolysis according to any one of (1) to (16), wherein the anode, the cathode, and the membrane define a zero-gap structure.

(18) A hydrogen production method for producing hydrogen by electrolyzing water containing an alkali in the bipolar electrolyzer as defined in any of (1) to (17).

(Advantageous Effect)

In accordance with the present disclosure, provided are a bipolar electrolyzer and a hydrogen production method which can maintain a superior electrolysis efficiency and higher purities of evolved gases even during high current density operations and variable power source operations.

BRIEF DESCRIPTION OF THE DRAWINGS

In the accompanying drawings:

FIG. 1 is a side view generally illustrating an example of a bipolar electrolytic cell for alkaline water electrolysis according to the present embodiment;
FIG. 2 is a diagram illustrating an overview of an alkaline water electrolysis device provided with one example of the bipolar electrolyzer for alkaline water electrolysis of the present embodiment;
FIG. 3 is a plan view illustrating a net portion of an expanded substrate in one example of a porous electrode in the bipolar electrolyzer for alkaline water electrolysis of the present embodiment, together with a cross-sectional view when being cut on the plane along Line A-A in the plan view;
FIG. 4 is a plan view illustrating a net portion of a plain weave mesh-type substrate of one example of a porous electrode in the bipolar electrolyzer for alkaline water electrolysis of the present embodiment; and
FIG. 5 is a plan view illustrating a punching substrate in one example of a porous electrode in the bipolar electrolyzer for alkaline water electrolysis of the present embodiment.

DETAILED DESCRIPTION

The following provides a detailed description of an embodiment of this disclosure (hereinafter, referred to as the "present embodiment").

An electrolyzer for alkaline water electrolysis of a present embodiment is a bipolar electrolyzer, wherein multiple bipolar elements each having an anode on one side and a cathode on the other side, are arranged so as to be parallel to each other having membranes sandwiched therebetween and are connected in series, and only the two ends are connected to a power source. In other words, the electrolyzer for alkaline water electrolysis of the present embodiment is a bipolar electrolyzer including multiple combinations of an anode, a cathode, and a membrane disposed between the anode and the cathode (each of the combination is also referred to as an "electrolytic cell").

Hereinafter, a detailed description will be provided on an anode, a cathode, and a membrane that are essential elements characterizing the bipolar electrolyzer for alkaline water electrolysis of the present embodiments.

In an alkaline water electrolysis reaction, alkaline water is electrolyzed in an electrolyzer having pairs of electrodes (i.e., an anode and a cathode) connected to a power source, for producing oxygen gas at the anodes and hydrogen gas at the cathodes. Note that, as used herein, the term "electrode(s)" refers to either one or both of an anode and a cathode.

Our studies have revealed that sizes of bubbles of gases generated from electrodes (an anode and a cathode) were strongly depended on the pore size of pores in the electrodes, and that the smaller the pores in the electrodes were, the smaller bubbles of the generated gases became. It was found out that smaller pore size increased the specific surface area and thus reduced the overvoltage across the electrodes. At the same time, as the pore size became smaller, the amounts of gases permeating through the porous membranes, i.e., membranes, increased, which resulted in reduced purities of generated gases. On the contrary, when the pore size was increased to improve the gas purities, the sizes of bubbles of generated gases increased and accordingly the barrier property of the porous membranes increased. However, the electrolysis efficiency may drop because the smaller specific surface areas of the electrodes increased the overvoltage.

In the meantime, inorganic particles in a porous film are present in the form of aggregates, generally referred to as "secondary particles" which are aggregates of primary particles, in a matrix of a hydrophobic organic polymer in the porous membrane. An electrolytic solution penetrates to through-holes defined by the secondary particle aggregates, thereby permeability of ions is provided during electrolysis. If the primary grain size of inorganic particles is too small, permeation of gas bubbles through the through-holes is prevented more effectively, although the permeability of the ions is restricted. It was found out that the results were vise versa when primary particle diameter was too larger.

Through repeating well-designed experiments, we have found that reductions in the electrolysis efficiency and the purity of hydrogen were suppressed even during temporary high current density operations by appropriately combining the range of the pore size of pores in the electrodes and the range of the primary particle size of inorganic particles in the porous films, thereby completing the present disclosure.

[Electrodes (anode and cathode)]

In a bipolar electrolyzer and a bipolar electrolyzer for alkaline water electrolysis of the present embodiments (for example, any of (1) to (19) above), at least one of the anode or the cathode is a porous electrode having an average pore size of 10 nm or more and 200 nm or less. From the perspective of further enhancing the above advantageous effects, the average pore size of the porous electrodes is preferably 40 nm or more and 190 nm or less, and more preferably 50 nm or more and 180 nm or less.

The average pore size of the porous electrodes can be measured by the BET method. A measurement sample is placed in a dedicated cell and subjected to pretreatment through vacuum evacuation by heating to remove adsorbates on pore surfaces in advance. Then, the adsorption/desorption isotherm of gas adsorption to the measurement sample is measured at -196°C. The average pore size can be obtained from analysis of the obtained adsorption/desorption isotherm by the BET method. More specifically, it can be measured with the method described in the Examples below.

Additionally, in the present embodiments (for example, any of (1) to (19) above), the membrane used in combination with the above-described porous electrodes is a porous membrane containing inorganic particles of an average primary grain size 20.0 nm or more and 300 nm or less.

Note that the range of the average pore size of the porous electrode and the range of the average primary grain size of the inorganic particles in the membrane (porous membrane) may be individually selected as appropriate for obtaining the effects of the present disclosure.

In the present embodiments (for example, any of (1) to (19) above), the double layer capacitance of the porous electrode is, but not limited to, preferably 0.5 $F/cm^2$ or more and 4.0 $F/cm^2$ or less, more preferably 0.6 $F/cm^2$ or more and 3.8 $F/cm^2$ or less, and even more preferably 0.7 $F/cm^2$ or more and 3.6 $F/cm^2$ or less. The "double layer capacitance" refers to an electrostatic capacity of the electric double layer generated at the interfaces of electrodes and an electrolytic solution, and represents a simulated specific surface area available for electrolysis on the electrode surfaces. A double layer capacitance within this range can optimize the specific surface area available for electrolysis, thereby further reducing the overvoltage and further improving the electrolysis efficiency.

The double layer capacity can be measured by an electrochemical impedance method. The double layer capacity is calculated by analyzing the Cole-Cole plot obtained by plotting real and imaginary components from AC impedance measurement using equivalent circuit fitting.

In the case of a zero-gap electrolyzer described later, it is necessary to remove the gas evolved from the back side of a surface of the porous electrode in contact with the membrane, and it is preferable that the surface of the porous electrode in contact with the membrane and the opposite surface penetrate each other.

From the perspective of controlling the average pore size, examples of the porous electrode in the present embodiments (for example, any of (1) to (19) above) include, but are not limited to, electrodes, and a metal formed bodies, for example, having net (mesh) structures, such as plain weave mesh, punching types, and expanded structures. Of these, from the perspective of controlling the sizes and morphologies of pores, the porous electrode preferably has a net structure of a type selected from the group consisting of a plain weave mesh, a punching, and an expanded structure

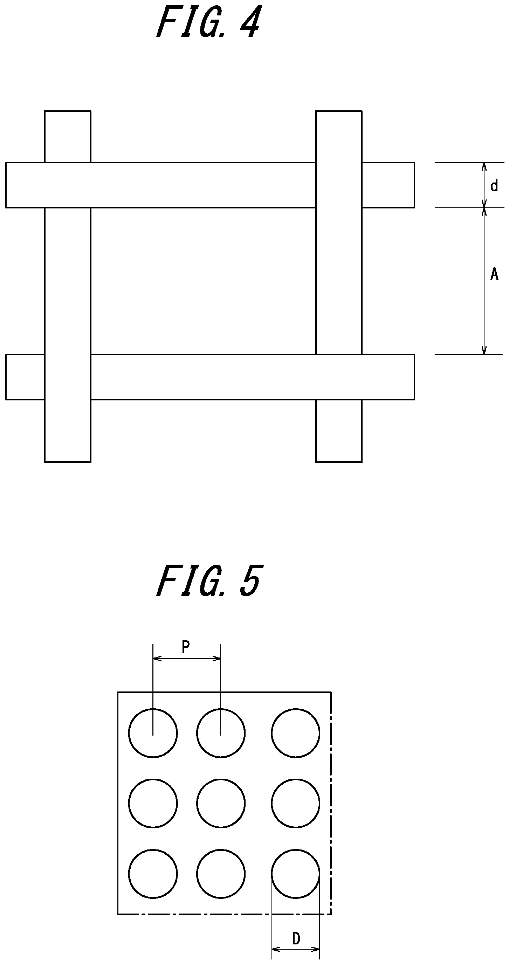

A plain weave mesh type has a net-like structure where multiple metal or resin wire materials which are parallel to each other in one direction, are woven with multiple metal or resin wire materials that are parallel to each other in another direction, so as to alternatingly cross over having given spacing defined between the wire materials. An enlarged view of an opening in one example of a plain weave mesh porous electrode is illustrated in FIG. 4.

Note that the shape of openings in a plain-weave mesh porous electrode is a parallelogram defined by a pair of two adjacent wire materials parallel to each other in one direction, which cross to another pair of two adjacent wire materials parallel to each other in another direction, when observed from the direction orthogonal to the plane of the opening. The parallelogram may a square, a rectangle, or a rhombus.

In the present embodiments (for example, any of (1) to (19) above), when a plain weave mesh porous electrode is used, the dimension is not particularly limited, but the mesh opening (A) may be 0.1 mm or more and 5.0 mm or less, and is preferably 0.2 mm or more and 4.0 mm or less, and more preferably 0.3 mm or more and 3.0 mm or less, for enabling both increased volume of generated gases with increased electrolysis surface areas and an efficient escape of gases produced from the electrode surfaces during electrolysis.

Here, as illustrated in FIG. 4, the "mesh opening (A)" refers to the average of the vertical distance between two paired adjacent parallel wire materials and the vertical distance between the other two paired wire materials, of four wire materials defining an opening of a plain weave mesh. For a substrate having varied mesh openings (A), the average thereof is used.

Note that the mesh opening can be determined from the wire diameter and the mesh number, which will be described later, by the following equation:

$$\text{Mesh opening} = (25.4 \text{ / mesh number}) - \text{wire diameter.}$$

In the present embodiments (for example, any of (1) to (19) above), dimensions other than the mesh opening are preferably, but not limited to, the wire diameter of 0.05 mm or more and 1.0 mm or less, and the mesh number of 5 or more and 70 or less. More preferably, the wire diameter is 0.1 mm or more and 0.3 mm or less, and the mesh number is 10 or more and 65 or less.

As illustrated in FIG. 4, the wire diameter is the diameter of wire materials constituting the plain weave mesh. The mesh number is the number of openings per inch (25.4 mm) and can be determined by the following equation:

$$\text{Mesh count} = 25.4 \text{ / (mesh opening} + \text{wire diameter)}.$$

A punching structure has a net structure where multiple round or rectangular punched holes are perforated at regular spacing in a metal or resin plate. The shape of the punched holes is, but not limited to, preferably circular, more preferably perfect circular, from the perspective of the mechanical strength. A plan view of one example of a punching porous electrode is illustrated in FIG. 5.

In the present embodiments (for example, any of (1) to (19) above), when a punching porous electrode is used, the dimension is not particularly limited, but the hole size (D) may be 0.5 mm or more and 12.0 mm or less, and the hole-to-hole pitch (P) may be 0.5 mm or more and 15 mm or less, for enabling both increased volume of generated gases with increased electrolysis surface areas and an efficient escape of gases produced from the electrode surfaces during electrolysis. Preferably, the hole size (D) is 1.0 mm or more and 10.0 mm or less and the hole-to-hole pitch (P) is 1.0 mm or more and 10.0 mm or less; more preferably, the hole size (D) is 1.5 mm or more and 8.0 mm or less, and the hole-to-hole pitch (P) is 1.5 mm or more and 8.0 mm or less.

Here, the "hole size (D)" refers to the diameter when punched holes are perfect circular, or as the average of the major- and the minor-axis diameters when the punched holes are elliptic. The "hole-to-hole pitch (P)" refers to the center-to-center distance between one punched hole and the closest punched hole. In other words, it is defined as the shortest one of the distances between the center of one punched hole and the centers of adjacent punched holes adjacent to the one punched hole. For a substrate having varied hole sizes (D) and hole-to-hole pitches (P) of openings, the averages thereof are used.

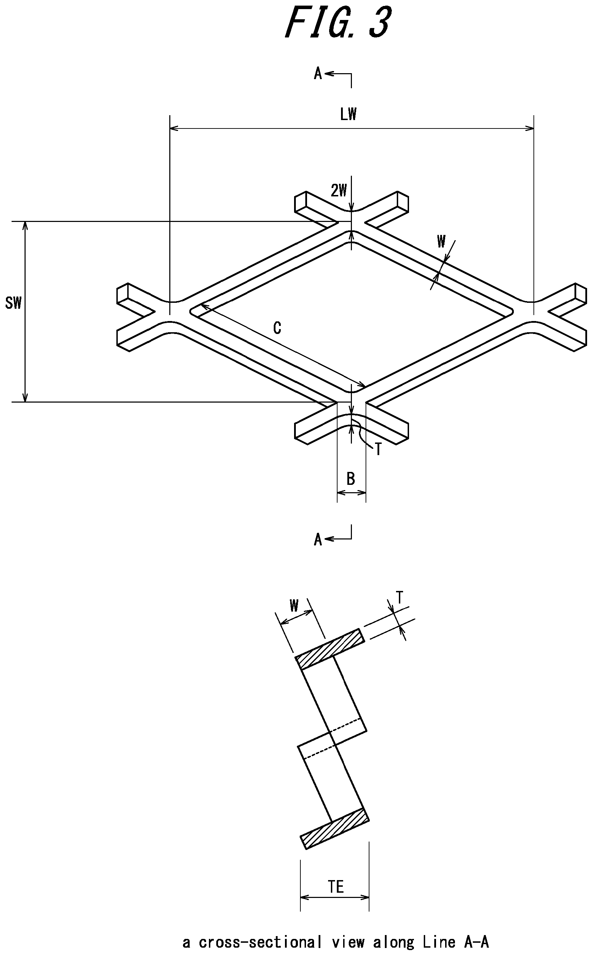

**An** expanded structure has a net structure where slits in zigzag perforated in a metal or resin plate are expanded to define rhomboidal openings. Here, the "rhombus" in an expanded structure refers to a parallelogram in which four sides have equal lengths, the diagonals are orthogonal to each other, and one of the four interior angles is more than 0° and less than 180°. It includes the case where one of the interior angles is 90°, i.e., square. A plan view and a cross-sectional view enlarging an opening in one example of an expanded porous electrode, are illustrated in FIG. 3.

In the present embodiments (for example, any of (1) to (19) above), when an expanded porous electrode is used, the dimension is not particularly limited, but the center-to-center distance in the long-hand direction of a mesh (LW) may be 1.0 mm or more and 10.0 mm or less, and the center-to-center distance in the short way of mesh (SW) may be 0.5 mm or more and 8.0 mm or less, for enabling both increased volume of generated gases with increased electrolysis surface areas and an efficient escape of gases produced from the electrode surfaces during electrolysis. Preferably, the LW is 2.0 mm or more and 6.0 mm or less, and the SW is 1.0 mm or more and 5.0 mm or less; more preferably, the LW is 3.0 mm or more and 5.0 mm or less, and the SW is 1.0 mm or more and 4.0 mm or less.

Here, the "center-to-center distance in the long way of mesh (LW)" refers to the longest distance between the centers of adjacent bonds (mesh crossings), when observed from the direction orthogonal to the plane of the opening. The "center-to-center distance in the short way of mesh (SW)" refers to the shortest distance between the centers of bonds adjacent in the direction orthogonal to the LW, when observed from the direction orthogonal to the plane of the opening. For a substrate having varied LWs and LSs of meshes, the averages thereof are used.

When a metal foam is used as a porous electrode, the dimension is not particularly limited, but the porosity is preferably 80% or more and 95% or less, for enabling both increased volume of generated gases with increased electrolysis surface areas and an efficient escape of gases produced from the electrode surfaces during electrolysis.

In the present embodiments (for example, any of (1) to (19) above), the surface aperture ratio of the porous electrode may be, but not limited to, 8% or more and 85% or less, for example, and preferably 30% or more and 80% or less, more preferably 31% or more and 70% or less, and even more preferably 35% or more and 65% or less, from the perspective of improving the electrolysis efficiency.

Note that the "surface aperture ratio of a porous electrode" refers to the proportion of pores to the surface of the porous electrode. The surface aperture ratio of a porous electrode may be determined by taking an image of a measurement sample under a scanning electron microscope (SEM) from the direction orthogonal to the electrode surface, and determining the proportion of the pore area to the surface area of the electrode. More specifically, it can be measured with the method described in the Examples below.

The thickness of the porous electrode is preferably, but not limited to, about from 0.7 mm to 3 mm from the perspective of the mechanical strength.

In the present embodiments (for example, any of (1) to (19) above), the water contact angle to the porous electrode is, but not limited to, preferably more than 0° and 30° or less, more preferably more than 0° and 25° or less, and even more preferably more than 0° and 20° or less. A water contact angle within this range improves the wettability of the electrode surface, which further facilitates efficient escape of generated gases from the electrode surfaces, thereby further increasing the electrolysis efficiency. Here, the "water contact angle to a porous electrode" refers to the angle between a tangent line and the surface of the porous electrode, the tangent line is, when a droplet of water is dropped to the surface of the porous electrode, the line drawn from where the droplet contacts the porous electrode, to the surface of the droplet.

A water contact angle can be measured by the $\theta/2$ method using a commercially-available contact angle meter.

In the present embodiments (for example, any of (1) to (19) above), although the porous electrode may be a bare substrate or a substrate having a catalyst layer with a high reaction activity on its surface, the latter is preferred.

In the present embodiments (for example, any of (1) to (19) above), when the porous electrode is configured only from a bare substrate, the average pore size, the surface aperture ratio, and the water contact angle set forth above for of porous electrode refer to those of the substrate surface.

In the present embodiments (for example, any of (1) to (19) above), when the porous electrode includes a substrate and a catalyst layer coating a surface of the substrate, the average pore size, the surface aperture ratio, and the water contact angle set forth above of that porous electrode refer to those of the surface of the electrode catalyst layer.

Examples of the material of the substrate include, but are not limited to, electrically conductive base materials made from at least one selected from the group consisting of nickel, iron, soft steels, stainless steels, vanadium, molybdenum, copper, silver, manganese, platinum group elements, graphite, and chromium. A electrically conductive substrate made from of an alloy of two or more metals or a mixture of two or more electrically conductive materials may also be used. Of these, from the perspectives of the conductivity of the substrate and the resistance to the usage environment, nickel and nickel-based alloys are preferable.

In the present embodiments (for example, any of (1) to (19) above), the catalyst layer in the anode preferably has a high oxygen-generating ability, and nickel, cobalt, iron, and platinum group elements, for example, may be used. These substances can constitute a catalyst layer as elemental metals, compounds (e.g., oxides), composite oxides or alloys made of multiple metal elements, or mixtures thereof, for providing desired activity and durability. Specific examples include nickel plating, alloy plating of nickel and cobalt, nickel and iron, and the like, complex oxides including nickel and cobalt such as $LaNiO_3$, $LaCoO_3$, and $NiCo_2O_4$, compounds of platinum group elements such as iridium oxide, carbon materials such as graphene, and the like. Organic substances such as polymers may be contained in order to improve durability and adhesion to the substrate.

In the present embodiments (for example, any of (1) to (19) above), the catalyst layer in the cathode preferably has a high hydrogen-generating ability, and nickel, cobalt, iron, and platinum group elements, for example, may be used. In order to realize desired activity and durability, the catalyst layer can be formed as a simple substance of a metal, a compound such as an oxide, a complex oxide or alloy composed of a plurality of metal elements, or a mixture thereof. Specifically, examples include Raney Nickel; Raney alloys made of combinations of multiple materials (e.g., nickel and aluminum, and nickel and tin); porous coating made by spraying nickel compounds or cobalt compounds as raw materials by plasma thermal spraying; alloys and composite compounds of nickel and an element selected from cobalt, iron, molybdenum, silver, and copper, for example; elementary metals and oxides of platinum group elements with high hydrogen generation abilities (e.g., platinum and ruthenium); mixtures of elementary metals or oxides of those platinum group element metals and compounds of another platinum group element (e.g., iridium or palladium) or compounds of rare earth metals (e.g., lanthanum and cerium); and carbon materials (e.g., graphene). For providing higher catalyst activity and durability, the above-listed materials may be laminated in a plurality of layers, or may be contained in the catalyst layer. An organic material, such as a polymer material, may be contained for improved durability or adhesiveness to the substrate.

In the present embodiments (for example, any of (1) to (19) above), when porous electrodes are provided with a catalyst layer, at least one of the catalyst layers in the anode or cathode preferably contains nickel (Ni), from the perspectives of the conductivity of the electrode, the gas generation ability, and the resistance to the usage environment.

In the above-described porous electrode, the range of the average pore size, presence or absence of a catalyst layer, the range of the composition of the catalyst layer, the range of the double layer capacitance, the range of the water contact angle, the range of the surface aperture ratio, and the shape of the substrate may be individually selected as appropriate for obtaining the effects of the present disclosure.

In addition, the above-described porous electrode and membrane (porous membrane) described later may be individually selected as appropriate for obtaining the effects of the present disclosure.

If the catalyst layer is too thick, the electric resistance may increase, resulting in an increased overvoltage. On the contrary, if the catalyst layer is too thin, it may be dissolved or peel off during long-time electrolysis and/or when the electrolysis is stopped, causing degradation of the electrode, resulting in an increased overvoltage.

For those reasons, the thickness of the catalyst layer is preferably 0.2 $\mu$m or more and 1000 $\mu$m or less, and more preferably 0.5 $\mu$m or more and 300 $\mu$m or less.

Note that the thickness of the catalyst layer can be measured by, for example, observing the cross section of the electrode under an electron microscope.

Examples of the method of forming the catalyst layer on the substrate include: a thermal spraying method such as plating or plasma spraying; a thermal decomposition method including applying heat to a precursor layer solution applied onto a substrate; a method including mixing a catalyst substance with a binder component and immobilizing it on a substrate; and a vacuum film-forming method such as a sputtering method.

Examples of the thermal spraying method include one comprising melting thermal spray powder with a heat generated by combusting a combustible gas (e.g., acetylene) with oxygen; one comprising melting a rod of thermal spray powder (raw material power for the catalyst layer) used for thermal spraying with a heat generated by combustion of a combustible gas, followed by spraying by the combustion gas; and one comprising melting thermal spray powder by a plasma gas generated by heating a gas (e.g., argon, hydrogen, nitrogen, or helium). Of these, plasma thermal spraying is preferable in which thermal spray powder is molten by plasmatizing a gas of nitrogen or argon mixed with hydrogen. The plasma gas is almost as fast to exceed the sonic velocity, and the gas temperature is 5000°C or higher. Accordingly, it enables thermal spray powder of a high melting point to be molten, and the molten thermal spray powder to be adhered on the substrate at a high speed. As a result, formation of a denser and stronger coating layer is made possible. With plasma thermal spraying, its high coating speed of raw material power enables a catalyst layer with a thickness of 10 $\mu$m to 1000 $\mu$m to be formed in relatively shorter time. The density of pores defined between particle while particles of molten raw material powder is being deposited on the substrate by the plasma thermal spraying, tends to be higher compared to other thermal spraying. While an oxide is sprayed on the substrate by thermal spraying using a plasma gas containing hydrogen, reduction of a part of the coating is facilitated, which increases the conductivity of the coating layer, enabling fabrication of electrodes having excellent conductivities.

Pores can also be provided in a catalyst layer through a reduction of a thermally-sprayed coating layer (also referred to as "precursor for the catalyst layer" in Examples) in a hydrogen stream. The temperature to hydrogen-reduce a thermally-sprayed metal oxide layer is important, and if the reduction temperature is too high, pores may collapse due to a heat generated during the reduction, and pores may not be provided as expected or the specific surface area and the pore volumes may not be achieved as expected. In contrast, if the reduction temperature is too low, the reduction of the metal oxide does not proceed. For example, when nickel oxide is used as a metal oxide, the temperature of hydrogen reduction is preferably 180°C to 300°C, particularly preferably 180°C to 250°C.

The reduction of the coating layer may be achieved by electrolysis.

The surface of the catalyst layer obtained in the above-described thermal spraying step or reduction step may be modified with at least one catalyst selected from the group consisting of rhodium, palladium, iridium, and ruthenium.

Since a film fabricated by plasma thermal spraying is porous, an electrode having a high specific surface area is provided.

As raw materials for plasma thermal spraying, powder of metal oxides are preferably used. Prior to a plasma thermal spraying step, metal oxide powder having an average grain size of 1.0 $\mu$m to 5.0 $\mu$m is granulated by a spray drying granulation apparatus to obtain metal oxide particles having an average grain size of 10 $\mu$m to 100 $\mu$m. The resultant metal oxide particles are blown into a high-temperature gas, such as a plasma gas, and are molten and sprayed on an electrically conductive substrate. In other words, the electrically conductive substrate is coated with the molten metal oxide. If the grain size of the metal oxide before the granulation is too larger or too small, the required pore size, specific surface area, and pore volume are not achieved during the formation of an electrode. The average grain size of the metal oxide powder is preferably 1.0 $\mu$m to 5.0 $\mu$m, and more preferably 1.0 $\mu$m to 1.2 $\mu$m.

The metal oxide used as the raw material for plasma thermal spraying preferably contains at least nickel oxide in terms of the durability to the electrolytic environment and the catalytic ability. A mixture of nickel oxide power and powder of another substance may be used as the raw material. Examples of the powder of another substance include powder of at least one metal selected from the group consisting of metallic nickel, titanium, chromium, molybdenum, cobalt, manganese, iron, tantalum, zirconium, aluminum, zinc, platinum group and rare earth elements. In addition, the nickel oxide power prior to spraying on the electrically conductive substrate may be mixed with at least one additive selected from the group consisting of gum arabic, carboxymethyl cellulose, and sodium lauryl sulfate.

In thermal spraying such as plasma thermal spraying, the average pore size and the surface aperture ratio of the electrode catalyst layer can be controlled by controlling the grain size of the metal oxide as the raw material, the average grain size of granules thereof, and the ratio of a raw material (e.g., metal oxide) to be thermally sprayed and an additive in the granules, for example.

With a thermal decomposition method, it is possible to form a thin layer having a uniform thickness on a porous substrate. It is thus possible to coat the surface of the substrate with a small amount of raw material in an efficient way.

When a thermal decomposition method is used, the method comprises: forming a precursor layer on a surface of the substrate; and performing sintering such that a catalyst layer is formed by heating the substrate with the precursor layer formed on the surface thereof and decomposing the precursor layer.

The precursor formation step may be carried out by a method of applying a liquid containing a metal element on a substrate surface, for example. The metal in the coating liquid is not limited to a particular form, and may be in the form of fine particles of a metal or a metal compound, or may be dissolved and ionized. In the form of fine particles, the metal is preferably dispersed in the liquid in order to form a homogeneous precursor layer. Accordingly, the particle size is preferably 100 nm or less. When it is ionized, examples of the metal salt include: halide salts such as fluoride, chloride, bromide, and iodide; inorganic compound salts such as nitrate, sulfate, and phosphate; and organic compound salts represented by acetate. Among these preferred are chlorides and nitrates since the raw materials are industrially available. In addition, nitrate is more preferable because anion components remaining after decomposition of nitrate less deteriorates the substrate, making it possible to provide an electrode with good storage stability. The solvent of the solution may be any solvent as long as it can dissolve a solute such as a metal salt. Since the ability to prepare a high concentration solution contributes to increasing the coating amount and improving the productivity, it is preferable that the solvent contains water or at least one of alcohols having 2 to 5 carbon atoms. When the concentration of the metal salt of the solution is low, much energy is required for volatilization of the solvent. On the other hand, a high concentration of the metal salt may introduce non-uniformity, causing unevenness in the thickness of the catalyst layer. Therefore, the concentration of the metal salt of the coating liquid used in the forming of the precursor is preferably 0.001 mol/L or more and 1 mol/L or less, and more preferably 0.01 mol/L or more and 0.5 mol/L.

In the forming of the precursor layer, the liquid containing a metal element may be applied to the surface of the substrate with various known methods. Examples of such methods include: a dipping method that includes dipping a substrate in a liquid; a method that includes applying a liquid to a substrate with a brush; a roll method that includes applying a liquid impregnated in a sponge-like roll to a substrate; and an electrostatic coating method that includes applying, by spraying or the like, a coating liquid to a substrate with the coating liquid and the substrate charged to opposite polarities. In particular, from the perspectives of productivity and uniform coating in the catalyst layer, a roll method and an electrostatic coating method are suitably used.

Prior to application of the solution, surface treatment may be carried out to provide irregularities on the surface of the substrate. By providing irregularities on the surface of the substrate, adhesion between the substrate and the catalyst layer is improved. The surface treatment is not limited to a particular method. For example, blasting or etching with a chemical solution may be used.

The temperature at which the catalyst layer is formed in the sintering is not particularly limited as long as it is not lower than the thermal decomposition temperature of the metal salt used, yet is preferably 300°C or higher. The reason is that the thermal decomposition of many metal salts proceeds at 300°C or higher. The temperature is preferably 400°C or higher, and more preferably 500°C or higher, in order to allow thermal decomposition to proceed satisfactorily and to remove unreacted substances. When sintering is performed at a temperature above 1000°C, the substrate softens and may deform. The temperature is thus preferably 1000°C or lower, and more preferably 800°C or lower.

The forming of the precursor layer and the sintering are preferably repeated more than once. In order to form a catalyst layer having a desired thickness, it is possible to adjust only the amount of coating liquid per coating cycle or the concentration of the metal salt in the liquid, yet if the amount of liquid applied per coating cycle or the metal concentration in the liquid is excessively increased, non-uniformity may be introduced such that each layer may not be uniformly formed. Therefore, by repeating the forming of the precursor layer and the sintering more than once, it is possible to form a more uniform catalyst layer with a desired thickness. The number of repetitions is not particularly limited as long as a desired thickness can be obtained, yet it is preferably 5 or more and 30 or less.

After repeating the forming of the precursor layer and the sintering more than once, the method may further comprise performing additional sintering at a temperature at or above the temperature for the preceding sintering. At this time, the upper limit of the additional sintering temperature is preferably 1000°C or lower, and more preferably 800°C or lower.

In the aforementioned thermolysis, the average pore size and the surface aperture ratio of the electrode catalyst layer can be controlled by controlling the average grain size or the concentration of fine grains of the metal (including metal compounds and metal salts) in the coating liquid, the coating method, and the time to repeat the coating and sintering steps, for example.

In a bipolar electrolyzer and an electrode of the present embodiments (for example, any of (1) to (19) above), when only one of the anode and the cathode is a porous electrode having an average pore size of 10 nm or more and 200 nm or less, any of well-known electrodes may be used as the other electrode in the pair and may or may not be a porous electrode. In addition, with regards to properties other than the average pore size, the other electrode may or may not have the properties described above with regard to the porous electrode having an average pore size of 10 nm or more and 200 nm or less.

In a zero-gap configuration described later, a membrane is pressed against electrodes stronger than membranes in conventional electrolysis cells. For example, in an electrode utilizing an expanded substrate, a membrane may be damaged at edged of openings, or the membrane may enter into openings thereby providing a gap between a cathode and the membrane, which results in an increased voltage.

In order to solve the above-described issues, an electrode is preferably made as flat as possible. For example, a method may be applied in which a substrate that has been subjected to an expanding process (e.g., expanded substrate) is pressed with a roller to flatten the substrate. In this case, the substrate is desirably pressed and flattened to a thickness of 95% to 110% of the original thickness of the metal plate prior to the expanding process.

Surprisingly, the electrode manufactured with the above-described process is able to not only prevent damages of the membrane, but also reduce the voltage. The reason is not certain, but it is hypothesized that a uniform contact between the surface of the membrane and the electrode surfaces stabilizes the current density.

The sizes of the electrodes is not particularly limited, and can be determined according to, for example, the shapes and/or dimensions of the bipolar electrolyzer for alkaline water electrolysis, electrolysis cells, a bipolar element, partition walls, which will be described later, and also according to the desired electrolysis capacity. For example, if the partition walls are planar, the size may be determined according to the size of the partition walls.

[Membrane]

In an electrolysis cell, a membrane is disposed between an anode and a cathode to allow passages of an electrolyte containing ions while blocking passages of gases generated at the electrodes.

The membrane in the bipolar electrolyzer and the bipolar electrolyzer for alkaline water electrolysis of the present embodiments (for example, any of (1) to (19) above) is a porous membrane containing inorganic particles of an average primary grain size 20.0 nm or more and 300 nm or less. The average primary grain size of the inorganic particles is preferably 25 nm or more and 250 nm or less, more preferably 30 nm or more and 200 nm or less, and even more preferably 50 nm or more and 180 nm or less.

When the membrane is a porous membrane containing inorganic particles in the form of a porous membrane, the inorganic particles hydrophilize pores in the porous membrane, thereby improving the ion permeability, the permeability of the electrolyte, and the gas impermeability, which in turn improves the purities of generated gases. An average primary grain size of the inorganic particles within the above range can effectively prevent the inorganic particles from being detached from the porous membrane by increasing the contact area to the porous membrane per inorganic particle constituting a secondary particle in the porous membrane. In addition, the hydrophilicity inside the pores in the porous membrane is improved, which further improves the purities of the generated gases. Furthermore, a combination with porous electrodes having inorganic particles of the average pore size within the above certain range prevents inorganic particles detached from the porous membrane from occluding the pores in the porous electrodes.

The inorganic particles may be made to attach to the surfaces of the porous membrane, or a part of the inorganic particles may be embedded in the polymer material constructing the porous membrane. Furthermore, inorganic particles encapsulated in the voids in the porous membranes are less likely to be detached from the porous membrane, which contributes to maintain the performance of the porous membrane for a long time.

The average primary grain size of inorganic particles at a membrane (porous membrane) can be determined by the following procedure.

A measurement sample is observed under a scanning electron microscope (SEM) from the direction orthogonal to the electrode surface at a magnification where inorganic particles are visible. The image is binarized using image analysis software, an absolute maximum length of each of 10 non-coagulated inorganic particles is measured, and the number-average of the maximum lengths is determined. More specifically, it can be measured with the method described in the Examples below.

In the present embodiments (for example, any of (1) to (19) above), the average secondary grain size of the inorganic particle is, but not limited to, preferably 0.2 $\mu$m or more and 10.0 $\mu$m or less, and more preferably 0.5 $\mu$m or more and 8.0 $\mu$m or less, from the perspectives of prevention of their detachments from the membrane and hydrophilization inside the pores of the porous membrane. The "average secondary grain size" refers to an average grain size of a secondary particle constituted from inorganic particles in the porous membrane.

Note that the average secondary grain size can be determined from a volume distribution determined by laser diffraction/scattering, of inorganic particles remained after a polymer resin is resolved and removed from the porous membrane as a measurement sample. More specifically, it can be measured with the method described in the Examples below.

In the present embodiments (for example, any of (1) to (19) above), examples of the inorganic particles include, but are not limited to, particles of at least one inorganic substance selected from the group consisting of oxides or hydroxides of zirconium, titanium, bismuth, and cerium; oxides of Group IV elements of the periodic table; nitrides of Group IV elements of the periodic table; and carbides of Group IV elements of the periodic table, for example. Of these, oxides of zirconium, titanium, bismuth, and cerium, and oxides of Group IV elements of the periodic table are preferred from the perspective of the chemical stability, and more preferred are zirconium oxide ($ZrO_2$) and titanium oxide ($TiO_2$). These inorganic particles may be used alone or in combination of two or more thereof. The surfaces of the inorganic particles have a polarity. Considering the affinity of the inorganic particles to oxygen or hydrogen molecules with a low polarity and to water molecules with a high polarity in an electrolyte that is an aqueous solution, high-polarity water molecules are expected to be more readily adsorbed on the inorganic particles. Thus, presence of such inorganic particles on the surfaces of the membrane facilitates preferential absorptions of water molecules on the surfaces of the membrane, whereas hinders absorptions of bubbles of oxygen molecules and hydrogen molecules on the surfaces of the membrane. This effectively prevents gas bubbles from attaching to the surfaces of the porous membrane.

In the present embodiments (for example, any of (1) to (19) above), the average water permeation pore size of the porous membrane may be, but not limited to, 0.05 $\mu$m or more and 1.5 $\mu$m or less, and is preferably 0.1 $\mu$m or more and 1.0 $\mu$m or less, and more preferably 0.15 $\mu$m or more and 0.8 $\mu$m or less. An average water permeation pore size within this range provides a favorable ion permeability of the porous membrane, which is likely to reduce the voltage loss. Furthermore, bubble sizes of generated gases are controlled by the porous electrode having pores of the above-described average pore size, and are prevented from occluding or permeating through membrane pores. Additionally, secondary particles constituted as aggregates of primary particles are prevented from being detached. This contributes to maintain a high hydrophilicity of the porous membrane, thereby improving the permeability of the electrolyte, the ion permeability, and the gas impermeability. As a result, the gas impermeability of the membrane enhances without incurring an increase in the voltage loss by the membrane, which further improves the electrolysis efficiency and the purities of generated gases.

Note that the "average water permeation pore size of the porous membrane" refers to an average water permeation pore size measured in the following procedure using an integrity testing system ("Sartocheck Junior BP-Plus" available from Sartorius Stedim Japan K.K.). First, the porous membrane, together with a core material, is cut into a given-sized piece as a sample. This sample is set in an arbitrary pressure-resistant vessel, and the vessel is filled with pure water. Next, the pressure-resistant vessel is placed in a thermostatic chamber set to a predetermined temperature, and a measurement is initiated after the interior of the pressure-resistant vessel reaches the predetermined temperature. After the measurement is started, the front of the sample is pressurized with nitrogen. The values of the pressure and the permeation flow rate at which pure water permeates through the sample from its back are recorded. The average water permeation pore size can be determined by the following Hagen-Poiseuille equation using the gradient of the pressures versus the water permeation flow rates at pressures between 10 kPa and 30 kPa:

$$\text{Average water permeation pore size (m)} = \{32\eta L\mu_0 / (\varepsilon P)\}^{0.5}$$

where $\eta$ is the viscosity (Pa·S) of water, L is the thickness (m) of the porous membrane, and $\mu_0$ is an apparent flow rate calculated by the equation: $\mu_0$ (m/s) = flow rate (m$^3$/s) / flow passage area (m$^2$). In addition, $\varepsilon$ is the porosity and P is the pressure (Pa).

Here, the "porosity of the porous membrane" refers to the proportion of open pores determined by the Archimedes method, and can be determined the following equation:

$$\text{Porosity } \varepsilon \text{ (%)} = (\rho 1 - \rho 2) \times 100$$

where $\rho 1$ represents the water-saturated density (g/cm$^3$), i.e., the density of a sample in which open pores are saturated with water. $\rho 2$ represents the dry density (g/cm$^3$), i.e., the density of the sample in which water has been completely removed from the open pores and the open pores are dried out. $\rho 1$ and $\rho 2$ are determined by measuring w: the weight (g), d: the thickness (cm), and s: the area (cm$^2$) on the plane orthogonal to the thickness direction, and calculating $\rho$ = w / (d $\times$ s).

When the surface of the porous membrane sample contacting water has low water absorbency and thus the thickness and the area of the sample containing water does not significantly change from those of the dried sample, d and s can be assumed as constants.

Specifically, the porosity $\varepsilon$ can be measured in a room set at 25°C in the following procedure. A porous membrane washed with pure water is cut into three pieces with a size of 3 cm $\times$ 3 cm, and the thicknesses d thereof are measured with a thickness gauge. These measurement samples are immersed in pure water for 24 hours, and the respective weights w1 (g) are measured after removing extra water. Subsequently, the removed samples are allowed to dry in a dryer set at 50°C for 12 hours or longer, and the weights w2 (g) are then measured. The porosity is then determined from the values of wl, w2, and d. The values of the porosity are determined for the three samples, and the arithmetic average of the resultant values is employed as the porosity $\varepsilon$ of the porous membrane.

In the present embodiments (for example, any of (1) to (19) above), the maximum pore size of the porous membrane may be, but not limited to, 0.05 $\mu$m or more and 4.0 $\mu$m or less, for example, and is preferably 0.5 $\mu$m or more and 3.0 $\mu$m or less, and more preferably 0.8 $\mu$m or more and 2.0 $\mu$m or less, from the perspectives of the gas impermeability and prevention of occlusions.

The maximum pore size can be measured by the following procedure using the integrity testing system ("Sartocheck Junior BP-Plus" available from Sartorius Stedim Japan K.K.). First, the porous membrane to be used as a membrane, together with a core material, is cut into a given-sized piece as a sample. This sample is wet with pure water to impregnate the pores in the porous membrane with pure water, and then the sample is set in a pressure-resistant vessel for measurements. Next, the pressure-resistant vessel is placed in a thermostatic chamber set to a predetermined temperature, and a measurement is initiated after the interior of the pressure-resistant vessel reaches the predetermined temperature. After the measurement is started, the front of the sample is pressurized with nitrogen. The nitrogen pressure at which gas bubbles begin to continuously emerge on the back of the sample is employed as a bubble point pressure. The maximum pore size can be determined by the following bubble point equation which is a modification of the Young-Laplace equation:

$$\text{Maximum pore size (m)} = 4\gamma\cos\theta / P$$

where $\gamma$ is the surface tension (N/m) of water, $\cos\theta$ is the contact angle (rad) between the porous membrane surface and water, and P is the bubble point pressure (Pa).

Note that the smaller the difference between the average pore size and the maximum pore size of the porous membrane and maximum pore size is, the higher the separation performance of the porous membrane becomes. Particularly, since the variation in pore size of pores in the porous membrane is made smaller, during electrolysis, it is possible to reduce the likelihood that formation of pinholes will lower the purities of gases generated from the two electrode compartments.

In the present embodiments (for example, any of (1) to (19) above), the surface aperture ratio of the porous membrane is, but not limited to, preferably 20% or more and 80% or less, more preferably 25% or more and 75% or less, and further more preferably 30% or more and 70% or less, from the perspectives of the gas impermeability and the permeability of the electrolyte.

The opening area ratio of the porous membrane can be determined by the following procedure. An image of the surface of the porous membrane is taken with an SEM. Next, the image is binarized using an image analysis software ("WinROOF" available from MITANI Corporation) to distinguish pores from the rest of the surface. Subsequently, the resulting binarized image is analyzed to determine the proportion of the pores to the entire image, and the determined proportion is employed as the opening area ratio. More specifically, it can be measured with the method described in the Examples below.

In the present embodiments (for example, any of (1) to (19) above), the water contact angle to the porous membrane may be, but not limited to, 10° or more and 110° or less, and is preferably 20° or more and 100° or less, and more preferably 30° or more and 90° or less, from the perspectives of the gas impermeability and the permeability of the electrolyte. A water contact angle within this range can prevent gases generated at the electrodes from attaching to the surfaces of the electrodes and from inhibiting the reaction at the electrodes, which further increases the electrolysis efficiency.

The water contact angle to the porous membrane can be controlled by controlling the hydrophilicity of materials, such as a polymer, constituting the surface of the porous membrane.

The water contact angle to the porous membrane can be determined in the manner similar to the water contact angle to an electrode.

The average water permeation pore size, the maximum pore size, the average pore size, the surface aperture ratio, and the water contact angle of the porous membrane can be controlled by manufacturing the porous membrane with a manufacturing method of the porous membrane described later, for example.

Note that, in the above-described porous membrane (membrane), the range of the average primary grain size of the inorganic particles, the range of the average secondary grain size of the inorganic particles, the range of the chemical composition of inorganic particles, the range of the water permeation pore size, the range of the maximum pore size, the range of the surface aperture ratio, and the range of the water contact angle may be individually selected as appropriate for obtaining the effects of the present disclosure.

In addition, the above-described porous membrane (membrane) and the above-described porous electrodes may be individually selected as appropriate for obtaining the effects of the present disclosure.

Examples of the porous membrane used as the membrane in the present embodiment include polymer porous membranes, inorganic porous membranes, woven fabrics, and non-woven fabrics. They can be fabricated with well-known techniques.

Examples of the manufacturing method of a polymer porous membrane include a phase conversion method (microphase separation method), an extraction method, a draw method, and a wet gel draw method. In the phase conversion method (microphase separation method), a polymer material is dissolved in a good solvent to form a film from the resultant solution, and pores are provided by causing phase separation of the film in a poor solvent (non-solvent-induced phase separation). In the extraction method, a film is formed from a polymer material kneaded with inorganic powder, such as powder of calcium carbonate, and the inorganic powder is molten and extracted to provide pores. In the draw method, a film of a polymer material having a certain crystal structure is drawn in a certain condition to provide pores. In the wet gel draw method, a polymer material is swelled with an organic solvent, such as liquid paraffin, to form a gel sheet, which is then drawn under a certain condition, followed by extraction and removal of the organic solvent.

Examples of the manufacturing method of an inorganic porous membrane include a sintering method. In the sintering method, a product resulting from pressing or extrusion is sintered to cause unification while pores remaining in the membrane.

Examples of the manufacturing method of a non-woven fabric include spunbonding and elecrospinning. In spunbonding, yeans spun from molten pellets are pressed with heat rolls to cause unification to form a sheet. In elecrospinning, molten polymer is injected while a high voltage is being applied across a syringe containing the molten polymer and a collector, and thin elongated fibers are connected on the collector.

--- Porous polymer membrane ---

Examples of the polymer material include polysulfone, polyethersulfone, polyphenylsulfone, polyvinylidene fluoride, polycarbonate, tetrafluoroethylene-perfluoroalkyl vinyl ether copolymer, tetrafluoroethylene-ethylene copolymer, polyvinylidene fluoride, polytetrafluoroethylene, perfluorosulfonic acid, perfluorocarboxylic acid, polyethylene, polypropylene, polyphenylene sulfide, polyparaphenylene benzobisoxazole, polyketone, polyimide, and polyetherimide, for example. Of these, polysulfone, polyethersulfone, polyphenylsulfone, polyphenylene sulfide, and polytetrafluoroethylene are preferred, and more preferred is polysulfone. They may be use alone or in combination of two or more thereof.

By using polysulfone, polyethersulfone, and polyphenylsulfone as the polymer material, the resistance to high-temperature and high-concentration alkaline solutions is further increased.

In addition, the membrane can be produced in a further simplified manner, for example, by employing a process such as non-solvent-induced phase separation. In particular, the use of polysulfone enables precise control on the pore size.

Polysulfone, polyethersulfone, and polyphenylsulfone may be cross-linked. The weight average molecular weight of the cross-linked polysulfone, polyethersulfone, and polyphenylsulfone is preferably such that the polystyrene-equivalent weight average molecular weight is 40000 or more and 150000 or less. Examples of the method for cross-linking include, but are not limited to, cross-linking by means of irradiation with a radioactive ray such as an electron beam or γ-ray, and thermal cross-linking using a cross-linker. Note that the polystyrene-equivalent weight average molecular weight can be measured by the GPC.

The above-described polymer materials may be commercially available products. Examples of polysulfone include "Ultrason S PSU®" available from BASF and "Udel®" available from Solvay Advanced Polymers, "Ultrason S PSU®" and "Udel®" are registered trademarks in Japan, other countries, or both. Examples of polyethersulfone include "Ultrason E PES®" available from BASF and "Radel A®" available from Solvay Advanced Polymers, "Ultrason E PES®" and "Radel Al®" are registered trademarks in Japan, other countries, or both. Examples of polyphenylsulfone include "Ultrason P PPSU®" available from BASF and "Radel R®" available from Solvay Advanced Polymers, "Ultrason P PPSU®" and "Radel R®" are registered trademarks in Japan, other countries, or both. Examples of polyphenylene sulfide include "TORELINA®" available from Toray Industries, Inc., "TORELINA®" is a registered trademark in Japan, other countries, or both. Examples of polytetrafluoroethylene include "Teflon®" available from DuPont-Mitsui Fluorochemicals Co., Ltd., "Polyflon®" available from Daikin Industries, Ltd., and "Fluon®" available from Asahi Glass Co., Ltd., "Teflon®", "Polyflon®" and "Fluon®" are registered trademarks in Japan, other countries, or both.

The thickness of the porous membrane is preferably, but not limited to, 200 μm or more and 700 μm or less. When the thickness of is 250 μm or more, a better gas impermeability is provided and the strength of the porous membrane against an impact is further enhanced. When the thickness of the porous membrane is 700 μm or less, permeation of ions is less likely to be blocked by the resistance by the electrolyte contained in the pores during electrolysis operation, which helps to maintain better ion permeability. The above effects are enhanced, especially when the polymer resin contains at least one selected from the group consisting of polysulfone, polyethersulfone, and polyphenylsulfone.

-- Porous support --

When a porous membrane is used as a membrane, the porous membrane may be used with a porous support. The membrane preferably is structured such that a porous membrane encloses a porous support, and more preferably is structured such that porous membranes are laminated on both surfaces of a porous support. The membrane may have a structure where porous membranes are laminated on both surfaces of a porous support in a symmetric manner.

A porous support may be provided for the purpose of further enhancing the strength of the membrane. For example, defects such as cuts and tears in, and stretching of, the membrane due to mechanical stresses can be prevented. The membrane having a structure where porous membranes are laminated on both surfaces of a porous support can, even when scratches or holes (e.g., pinholes) are made in one surface of the porous support, maintain gas impermeability by means of the porous membrane laminated on the other surface of the porous support. When the membrane is structured such that porous membranes are laminated on both surfaces of a porous support in a symmetric manner, curling of the membrane is effectively prevented, and ease of handling of the membrane during transportation or during installation of the membrane is further improved.

The material of the porous support is preferably, but not limited to, a material that does not substantially reduce the permeability of the membrane to ions in an electrolyte. Examples of the material of the porous support include, but are not limited to, polyphenylene sulfide, polyethylene, polypropylene, fluorine resin, polyparaphenylene benzobisoxazole, polyketone, polyimide, and polyetherimide. Of these, polyphenylene sulfide is preferably contained. The use of polyphenylene sulfide provides the porous support with a high resistance to high-temperature and high-concentration alkaline solutions and a high chemical stability against active oxygen generated from an anode during water electrolysis process. In addition, since polyphenylene sulfide is readily processed into various forms, such as a woven fabric and a non-woven fabric, it can be appropriately modified according to the intended application or intended usage environment. They may be use alone or in combination of two or more thereof.

Examples of the porous support include a mesh, a porous membrane, a non-woven fabric, a woven fabric, and a composite fabric including a non-woven fabric and a woven fabric enclosed in the non-woven fabric. They may be use alone or in combination of two or more thereof. Examples of more preferred forms of the porous support include a mesh substrate made up of monofilaments of polyphenylene sulfide and a composite fabric including a non-woven fabric and a woven fabric enclosed in the non-woven fabric.

A porous support in the form of a mesh has a sufficiently high opening area ratio and thus helps to maintain the ion permeability of the membrane at a higher level. In addition, such a porous support has a high mechanical strength and thus more effectively prevents breakage or dimensional change of the membrane (the mechanical strength and the dimensional stability). Furthermore, separation of the porous support from the porous membrane can be effectively prevented by the anchoring effect. When the porous support is made up of monofilaments, the filament diameter of the monofilaments is preferably, but not limited to, 30 μm or more and 600 μm or less. When the lower limit of the filament diameter of the monofilaments is 30 μm or more, a satisfactory mechanical strength is provided, and accordingly the porous membrane becomes more resistant to breakage. When the upper limit of the filament diameter is 600 μm or less, unevenness of the mesh surface can be further reduced, and accordingly the smoothness of the surface of the porous membrane is further improved.

<Method for producing membrane>

The method for producing a membrane for alkaline water electrolysis is preferably carried out by, but not limited to, a non-solvent-induced phase separation process (also referred to as "wet phase separation process") An example of a production method by the non-solvent-induced phase separation process will be described in the following.

A production method by the non-solvent-induced phase separation process includes the following steps of:

preparing a solution containing a polymer resin, a solvent, and optional inorganic particles;
applying the solution to one side or the both sides of a porous support to form a coating on the porous support;
exposing the coating on the porous support to a gas containing vapor of a poor solvent for the polymer resin; and
immersing the coating on the porous support body in a coagulation bath containing a poor solvent for the polymer resin to form a porous membrane.

The above steps do not necessarily need to be performed in the order mentioned, as long as the effect of the present embodiment is obtained. The steps may be performed simultaneously or successively as appropriate.

The solvent has the property of dissolving polymer resins, and is preferably a good solvent having a high ability to dissolve a polymer resin to be used. This solvent can be selected as appropriate depending on, for example, the type of the polymer resin used. Examples of the solvent include, but are not limited to, N-methyl-2-pyrrolidone, N,N-dimethylacetamide, N,N-dimethylformamide, and dimethyl sulfoxide. These solvents may be used alone or in combination of two or more thereof. Of these, N-methyl-2-pyrrolidone is more preferred from the perspectives of the ability to dissolve various resins, non-volatility, and ease of solvent control, for example.

The poor solvent is a solvent in which the polymer resin is substantially insoluble, and is preferably a non-solvent in which the polymer resin is completely insoluble. The poor solvent can be selected as appropriate depending on the type of the polymer resin used. Examples of the poor solvent include, but are not limited to, water, methanol, ethanol, propyl alcohol, isopropyl alcohol, butyl alcohol, and isobutyl alcohol, and may be a mixture thereof.

To control the pore size at the surfaces and inside of the porous membrane, it is preferable, for example, to perform the step of exposing the coating to a gas containing vapor of a poor solvent for the polymer resin between the step of applying the solution to a porous support to form a coating on the porous support, and the step of immersing the coating on the porous support body in a coagulation bath containing a poor solvent for the polymer resin to form a porous membrane.

Note that "the pore size at the surfaces and inside of the porous membrane" include the average pore sizes, the surface aperture ratios, the average water permeation pore sizes, the maximum pore sizes, and the porosities, at the front and back surfaces of the porous membrane.

When the coating applied to the porous support is exposed to a gas containing vapor of a poor solvent, a slight amount of the poor solvent penetrates into the coating from the surface exposed to the vapor. In the region of the coating that is infiltrated with the poor solvent, non-solvent-induced phase separation begins and proceeds sufficiently before the coating is immersed in a coagulation bath. If the coating is immersed in a coagulation bath containing a poor solvent for the polymer resin without exposure of the coating to any poor solvent, the coating surface having undergone little phase separation coagulates, and accordingly the surface pore size becomes small. This leads to a poor ion permeability of the resulting membrane, resulting in an increased voltage loss. In addition, since the replacement of the solvent of the polymer resin with the poor solvent in the interior of the coating takes place through the minute pores formed in the coating surface, completion of coagulation of the interior of the coating takes long time. This lengthens the time required for phase separation in the interior of the coating, and large voids are more likely formed in the membrane. The formation of large voids in the membrane compromises the gas impermeability or the strength of the membrane. Accordingly, it is preferable to provide the step of exposing the coating surface to a gas containing vapor of a poor solvent and thereby infiltrating the poor solvent to the coating surface, since in this case, for example, the average pore sizes at the surfaces of the porous membrane is readily controlled to be equal to or greater than the lower limit described above. The pore size at the surfaces of the porous membrane can be controlled by adjusting the amount of the vapor to be permeated to the coating.

As for the method of generating vapor, for example, vapor may be generated by increasing the temperature of the coagulation bath in which the applied solution is to be immersed, or a vapor generation bath that is different from the coagulation bath may be used for vapor generation. The temperature to generate the vapor is preferably, but not limited to, 30°C or higher and 100°C or lower. When the temperature of vapor generation is 30°C or higher, vapor can be readily generated in such an amount to infiltrate to the applied solution and allow phase separation to proceed.

The time to expose the coating surface to a gas containing vapor of a poor solvent is preferably, but not limited to, 3 seconds or longer and 180 seconds or shorter. A suitable time to expose the coating surface to a gas containing vapor of a poor solvent can be selected as appropriate depending on, for example, the composition of the coating and the temperature of the vapor generation bath. In general, exposure time of 3 seconds or longer is preferred, since in this case, for example, the pore size at the surfaces of the porous membrane can be prevented from being excessively small, and the average pore sizes at the surfaces of the porous membrane is readily controlled to be equal to or greater than the lower limit described above. This allows the membrane to have favorable ion permeability, which makes it possible to more effectively prevent an increase in the voltage loss during operation. In addition, large voids are less likely formed inside the porous membrane, and accordingly high gas impermeability is maintained. In addition, exposure time of 180 seconds or shorter is preferred, since in this case, for example, the coating is not readily coagulated by the gas containing the poor solvent vapor even if the temperature of the vapor generation bath is high. Furthermore, the pore size at the surfaces of the porous membrane is prevented from being excessively large, and accordingly the average pore sizes at the surfaces of the porous membrane is readily controlled to be equal to or less than the upper limit described above. This more effectively prevents detachment of the inorganic particles from, for example, the pores of the porous membrane.

The time to immerse the coating on the porous support in the coagulating bath is preferably, but not limited to, 30 seconds or longer and 600 seconds or shorter. A suitable time to immerse the coating on the porous support in the coagulating bath can be selected as appropriate depending on, for example, the composition of the coating, the composition of the poor solvent, and the temperature of the vapor generation bath. The time 30 seconds or longer and 5600 seconds or shorter allows the coating on the porous support to be coagulated sufficiently.

The temperature of the coagulating bath is preferably, but not limited to, 10°C or higher and 60°C or lower. The temperature of the coagulating bath can be selected as appropriate depending on, for example, the composition of the coating, the composition of the poor solvent, and the temperature of the coagulating bath. Generally, temperatures of 10°C or higher and 60°C or lower can control the pore size at the surfaces and inside of the obtained porous membrane to a desired range.

Examples of the method for controlling pore size at the surfaces and inside of the porous membrane include, but are not limited to, a method by adding an additive for controlling pore size to a solution containing the inorganic particles, the polymer resin, and the solvent for the polymer resin. This method can control the average water permeation pore size and the maximum pore size of the porous membrane by varying the rate of non-solvent-induced phase separation induced when the solution makes contact to the coagulation bath containing a poor solvent for the polymer resin, or by eluting the additive from the coagulated polymer resin after coagulation of the polymer resin. Examples of the additive for controlling pore size include, but are not limited to, the organic compounds and inorganic compounds mentioned below.

As the organic compound, it is preferable to use those soluble in both the above solvent and the above poor solvent for the polymer resin. A suitable organic compound can be selected as appropriate depending on, for example, the types of the solvent and poor solvent to be used, and examples of the organic compound include polyethylene glycol, polyethylene oxide, polyvinylpyrrolidone, polyethyleneimine, polyacrylic acid, and dextran. Of these, polyethylene glycol, polyethylene oxide, and polyvinylpyrrolidone are more preferred, for example, in particular, from the perspective of compatibility with the solvent. Even more preferred is polyethylene glycol having a molecular weight of from 10000 to 50000, polyethylene oxide having a molecular weight of from 50000 to 300000, and polyvinylpyrrolidone having a molecular weight of from 30000 to 1000000, for example, since these compounds can significantly vary the phase separation rate even when added in a small amount. They may be use alone or in combination of two or more thereof.

The inorganic compound used is preferably soluble in both the above solvent and the above poor solvent for the polymer resin. A suitable inorganic compound can be selected as appropriate depending on, for example, the types of the solvent and poor solvent to be used, and preferred examples of the inorganic compound include calcium chloride, magnesium chloride, lithium chloride, and barium sulfate. They may be use alone or in combination of two or more thereof.

Alternatively, without using the additive, the phase separation rate, and therefore the pore size at the surfaces and inside of the porous membrane, may be controlled by adjusting the type, concentration, and temperature of the poor solvent in the coagulation bath. In general, the higher the phase separation rate is, the smaller the average pore size tends to be; in contrast, the lower the phase separation rate is, the greater the average pore size tends to be. It is also effective to add a poor solvent for the polymer resin to the solution containing the polymer resin and the solvent for the polymer resin to vary the phase separation rate and thereby control the average pore size at the porous membrane.

The content of the polymer resin in the solution containing the polymer resin, inorganic particles, and these solvents is preferably 5% by mass or more and 25% by mass or less, and more preferably 10% by mass or more and 15% by mass or less. A content of the polymer resin of equal to or less than the aforementioned upper limit further improves the mechanical strength of the porous membrane. A content of the polymer resin of equal to or more than the aforementioned lower limit suppresses an increase in the viscosity of the solution and further improves the film formation property, thereby providing the porous membrane with a further uniform thickness.

The content of the inorganic particles in the solution is preferably 10% by mass or more and 60% by mass or less, more preferably 20% by mass or more and 50% by mass or less, and even more preferably 25% by mass or more and 40% by mass or less. A content of the inorganic particles of equal to or less than the aforementioned upper limit suppresses an increase in the viscosity of the solution and further improves the film formation property, thereby providing the porous membrane with a further uniform thickness. A content of the inorganic particles of equal to or more than the aforementioned lower limit further improves the hydrophilicity of the porous membrane.

The content of the solvent in the solution is preferably 30% by mass or more and 80% by mass or less, more preferably 40% by mass or more and 70% by mass or less, and even more preferably 45% by mass or more and 60% by mass or less. A content of the solvent of equal to or less than the aforementioned upper limit suppresses an increase in the viscosity of the solution, and further prevents an unevenness and spot formation upon an application. A content of the solvent of equal to or more than the aforementioned lower limit facilitates dissolution of the polymer resin, and also facilitates further dispersion of the inorganic particles in the solution.

The method for preparing the solution is not particularly limited. For example, the following method can be used. A solvent for a polymer resin and inorganic particles are placed in a pot of a ball mill, and then the contents in the pot of the ball mill are stirred to disperse the inorganic particles in the solvent for the polymer resin. The resulting liquid is then filtered to separate the balls from the liquid. Subsequently, while the solution containing the inorganic particles dispersed therein is stirred with a mixing blade, the polymer resin is added and dissolved little by little in the solution, to prepare a solution for forming a membrane. If desired, an additive may be added for preparation of the solution. Alternatively, the solution may be prepared, for example, by placing the solvent for the polymer resin, the inorganic particles, and an additive in a pot of a ball mill all together, and then stirring the contents in the pot of the ball mill. Alternatively, an additive may be dissolved in the solvent for the polymer resin.

The methods for applying the solution containing the polymer resin, the inorganic particle, and their solvent on the porous support is not particularly limited. For example, the examples include, but are not limited to those by dispensing a solution onto the substrate and then scraping off an excess of the solution relative to the intended amount with a coater; one comprising impregnating a porous support with a solution and then squeezing the porous support with a roll to remove an excess of the solution relative to the intended amount, by impregnating a porous support with a solution and then scraping off an excess of the solution relative to the intended amount with a coater; and one comprising dispensing a coating liquid to a porous support through a T-die to provide a coating. Examples of the method for adjusting the thickness of the porous membrane include, but are not limited to, those by adjusting the distance between the porous support and a coater used for application of the solution, and by adjusting the amount of the solution to be applied through a T-die.

The addition of the solvent in addition to the poor solvent allows control of the phase separation rate and therefore control of the pore size at the surfaces and inside of the porous membrane. For example, the addition of the solvent to the coagulation bath can reduce the rate of replacement between the solvent in the coating and the poor solvent in the coagulation bath and thus lengthen the time of phase separation until competition of coagulation, thereby the pore size is increased. As the solvent, those mentioned above can be used. The proportion of the poor solvent in the coagulation bath is preferably 30% by volume or more, in order for the non-solvent-induced phase separation to proceed sufficiently and for the polymer resin to coagulate sufficiently. When the proportion is smaller, coagulation of the polymer resin may become insufficient. Accordingly, the proportion of the poor solvent in the coagulation bath is preferably 30% by volume or more.

Furthermore, preferably, a part of the porous membrane enters into pores in the porous support so as to be united with the porous support. When the porous membrane and the porous support are united together, separation of the porous support from the porous membrane is more effectively prevented by the so-called anchoring effect.

After the porous membrane is formed, a heat treatment may be further provided. The heat treatment facilitates crystallization or immobilization of polymer chains in the polymer resin to thus further stabilize the structure of the porous membrane. Examples of the method for the heat treatment include, but are not limited to those by immersing the porous membrane in a hot water bath; one comprising sandwiching the porous membrane between hot metal plates to press the porous membrane; and one comprising sandwiching the porous membrane between hot rolls to press the porous membrane. The heat treatment temperature is preferably, but not limited to, 80°C or higher and 210°C or lower, and more preferably 180°C or higher and 210°C or lower. A heat treatment temperature of 80°C or higher is higher than the temperature at which the porous membrane is used for water electrolysis. Thus, at the time when the porous membrane is used as a membrane, an undesired phenomenon, such as that where the structure of the porous membrane becomes unstable due to re-mobilization of the polymer chains in the polymer resin, is effectively prevented. A heat treatment temperature of 210°C or lower effectively prevents thermal degradation of the polymer. A heat treatment temperature of 180°C or higher is equal to or higher than glass-transition points of commonly-used polymer resins. Thus, the polymer chains can be crystallized or immobilized to provide the porous membrane with a higher heat resistance.

In the bipolar electrolyzer for alkaline water electrolysis of the present embodiment, a so-called "zero-gap structure" is preferably, but not limited to, formed in which a membrane 4 is in contact with an anode 2a and a cathode 2c. The "zero-gap structure" is a structure that can maintain a state in which the anode and the membrane are in contact with each other, and so are the cathode and the membrane, over the entire surfaces of the electrodes, or a state in which the distance between the electrodes is substantially the same as the thickness of the membrane 4 such that there is almost no gap between the anode and the membrane and between the cathode and the membrane, over the entire surfaces of the electrodes.

In alkaline water electrolysis, when there is a gap between the membrane and the anode respective the cathode, a large amount of gas bubbles generated by electrolysis is accumulated in this portion along with the electrolyte, leading to a significant increase in electric resistance.

In contrast, a zero-gap structure facilitates swift escape of generated gases to the other sides of electrodes opposing to the membrane through pores in the electrode. As a result, a voltage loss caused by the electrolyte and occurrence of gas stagnation near the electrodes are suppressed, and a lower electrolysis voltage is maintained, as well as reducing the distance between the anode and the cathode (also referred to as "inter-electrode distance").

Several means for configuring zero-gap structures have been proposed, and examples include one comprising flattening an anode and a cathode completely, and pressing against each other having a membrane sandwiched therebetween; and one comprising disposing elastic bodies, such as springs, between electrodes and a partition wall, thereby supporting the electrodes with the elastic bodies.

A preferred embodiment of a means for configuring zero-gap structures in the bipolar electrolyzer for alkaline water electrolysis of the present embodiment will be described later.

(Bipolar electrolyzer for alkaline water electrolysis)

One example of a bipolar electrolyzer for alkaline water electrolysis of the present embodiment provided with cathodes, anodes, and membranes described above will be described with reference to the drawings.

Note that the bipolar electrolyzer for alkaline water electrolysis of the present embodiment is not limited to the one described below. In addition, members other the anodes, the cathodes, and the membranes included in the bipolar electrolyzer for alkaline water electrolysis are not limited to the ones described below, and any well-known members may be selected, designed, or used as appropriate.

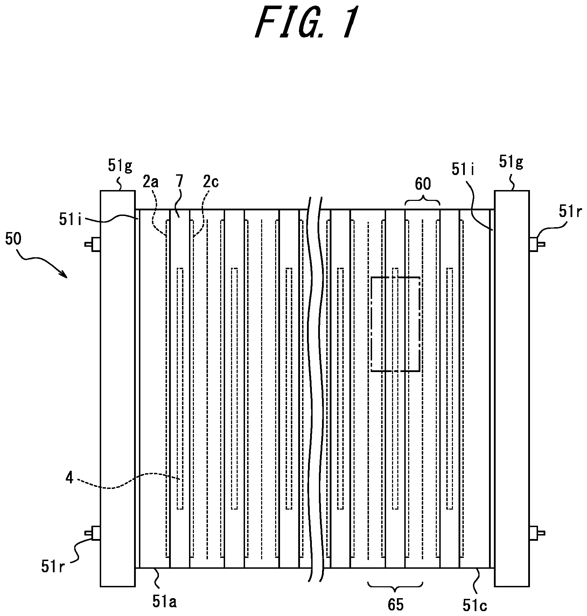

A schematic cross-sectional view of the entirely of one example of a bipolar electrolyzer of the present embodiment is illustrated in Figure 1.

As illustrated in FIG. 1, the bipolar electrolyzer for alkaline water electrolysis of the present embodiment is a bipolar electrolyzer 50 in which multiple electrolysis cells 65 are stacked having membranes sandwiched therebetween, wherein each electrolysis cell 65 includes an anode, a cathode, a partition wall separating the anode and the cathode, and an outer frame bordering the partition wall.

In the bipolar electrolyzer for alkaline water electrolysis of the present embodiment, zero-gap structures where membranes 4 is in contact with an anode 2a and a cathode 2c are preferably, but particularly not limited to, formed.

((Bipolar element))

A bipolar element 60 used in one example of the bipolar electrolyzer for alkaline water electrolysis includes a partition wall separating an anode 2a from a cathode 2c, and an outer frame bordering the partition wall. More specifically, the partition wall is electrically conductive, and the outer frame is provided so as to enclose the partition wall along the outer circumference of the partition wall.

In the present embodiment, as illustrated in FIG. 1, the bipolar type electrolyzer 50 is constructed by stacking the required number of bipolar elements 60.

In the example of the bipolar electrolyzer 50 illustrated in FIG. 1, a fast head 51g, an insulating plate 51i, and an anode terminal element 51a are arranged in order from one end, and an anode-side gasket portion 7, a diagram 4, a cathode side gasket portion 7, and a bipolar element 60 are arranged side by side in this order. In this case, each bipolar element 60 is arranged such that the corresponding cathode 2c faces toward the anode terminal element 51a side. Components from anode-side gasket portions 7 up to bipolar elements 60 are repeatedly arranged as many times as required for the designed production quantity. After the required number of components from anode gasket portion 7 up to bipolar elements 60 are repeatedly arranged, an anode-side gasket portion 7, a diagram 4, and a cathode-side gasket portion 7 are arranged again, and finally a cathode terminal element 51c, an insulating plate 51i, and a loose head 51g are arranged in this order. All of these components are tightened together with a tie rod 51r (see FIG. 1) or a clamping mechanism, such as the one employing an oil-hydraulic cylinder, to provide a bipolar electrolyzer 50.

The arrangement of the bipolar electrolyzer 50 can be arbitrarily selected from either the anode 2a side or the cathode 2c side and is not limited to the above order.

As illustrated in FIG. 1, in the bipolar electrolyzer 50, the bipolar elements 60 are arranged between the anode terminal element 51a and the cathode terminal element 51c, and the membranes 4 are arranged between the anode terminal element 51a and a bipolar element 60, between bipolar elements 60 arranged adjacent to each other, and between a bipolar element 60 and the cathode terminal element 51c, respectively.

Furthermore, in the bipolar electrolyzer 50 in the present embodiments, the partition walls, the outer frames, and the membrane 4 define electrode compartments through which the electrolyte passes.

Generally, the bipolar electrolyzer 50 has headers attached thereto, which are conduits for dispensing or collecting the electrolyte. Specifically, the bipolar electrolyzer 50 includes an anode inlet header for introducing the electrolyte to an anode compartment, and a cathode inlet header for introducing the electrolyte to a cathode compartment, at the lower portions of the outer frame on the circumference edge of a partition wall. Similarly, the bipolar electrolyzer 50 includes an anode outlet header for discharging the electrolyte from the anode compartment, and an anode outlet header for discharging the electrolyte from the cathode compartment, at the upper portions of the outer frame on the circumference edge of the partition wall.

A header attached to the bipolar electrolyzer 50 illustrated in FIG. 1 is typically disposed as an internal header or an external header. In the present disclosure, however, no limitation is placed on the type of header pipe and either type may be used.

The partition walls, the anodes 2a, and the cathodes 2c in the example illustrated in FIG. 1 are, but not limited to, planar having given thicknesses, and may have as a whole or in part, zig-zag or wave shapes in cross-section or may have round corners.

((Zero-gap structure))

In each bipolar element 60 in a zero-gap cell, as a means for reducing the distance between the electrodes, it is preferable to dispose a spring, which is an elastic body, between an electrode 2 and the corresponding partition wall to support the electrode 2 with the spring. In the case of adopting such a configuration using an elastic body, it is necessary to appropriately adjust the strength of the spring, the number of springs, the shape, and the like, as necessary, so as not to introduce non-uniformity in the pressure of the electrode 2 against the membrane 4.

Further, by strengthening the rigidity of the other electrode 2 paired with the electrode 2 supported via the elastic body (for example, by making the rigidity of the anode stronger than the rigidity of the cathode), the other electrode 2 is structured to have less deformation even when pressed. On the other hand, the electrode 2 supported via the elastic body has a flexible structure capable of deforming when pressed upon the membrane 4 such that irregularities due to fabrication accuracy of the electrolyzer 50, deformation of the electrode 2, and the like can be absorbed, and a zero-gap structure can be maintained.

(Alkaline water electrolysis device)

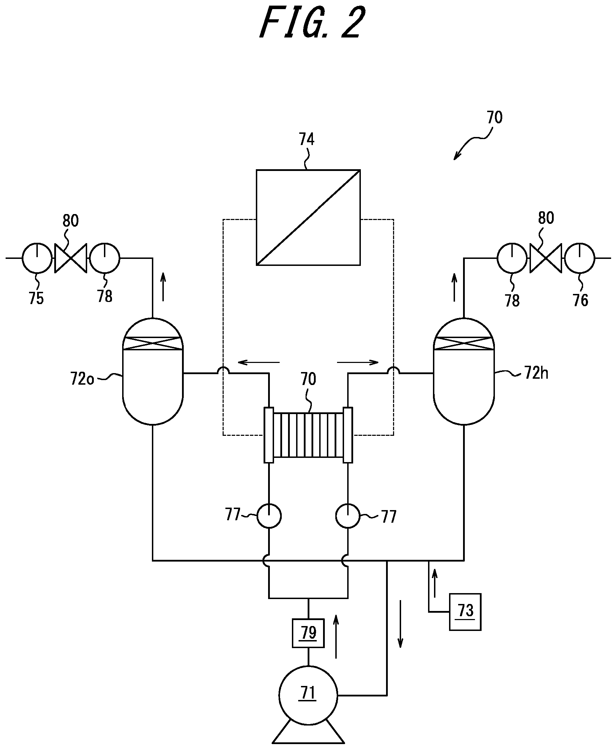

One example of an alkaline water electrolysis device that can employ the bipolar electrolyzer for alkaline water electrolysis of the present embodiment is illustrated in FIG. 2.

A alkaline water electrolysis device 70 may include, in addition to the bipolar electrolyzer 50 for alkaline water electrolysis the present embodiment, a tubing pump 71, gas-liquid separation tanks 72, a water replenisher 73, and may further comprise other components such as a rectifier 74, an oxygen concentration meter 75, a hydrogen concentration meter 76, flow meters 77, pressure gauges 78, a heat exchanger 79, and pressure control valves 80.

(Alkaline water electrolysis)

With the alkaline water electrolysis device provided with the bipolar electrolyzer for alkaline water electrolysis of the present embodiment, alkaline water electrolysis can be conducted by circulating an electrolyte through the alkaline water electrolysis device, which can provide a highly efficient alkaline water electrolysis, as well as maintaining a superior electrolysis efficiency and higher purities of generated gases even during high current density operations.

The electrolyte that can be used for the alkaline water electrolysis of the present embodiment may be an alkaline aqueous solution containing an alkali salt dissolved therein, and examples include NaOH aqueous solution and KOH aqueous solution.

The concentration of the alkali salt is, but not limited to, preferably 20% by mass or more and 50% by mass or less, and more preferably 25% by mass or more and 40% by mass or less.

Of these, KOH aqueous solution of 25% by mass or more and 40% by mass or less is particularly preferable from the perspectives of the ionic conductivity, the kinematic viscosity, and the freezing behavior at freezing temperatures.

The temperature of the electrolyte in the electrolysis cells is preferably, but not limited to, 80°C to 130°C. The above temperature range effectively suppresses thermal degradation of the members in the electrolysis device, including the gaskets and the membranes, as well as maintaining high electrolysis efficiency.

The temperature of the electrolyte is, but not limited to, further preferably 85°C or higher and 125°C or lower, particularly preferably 90°C or higher and 115°C or lower.

The current density supplied to the electrolysis cell during alkaline water electrolysis of the present embodiment is, but not limited to, preferably 4 kA/m$^2$ to 20 kA/m$^2$, and further preferably 6 kA/m$^2$ to 15 kA/m$^2$. The upper limit is preferably set within the above range particularly when a variable power source is used.

The pressure inside the electrolysis cell during the alkaline water electrolysis of the present embodiment is, but not limited to, preferably 3 kPa to 1000 kPa, and more preferably 3 kPa to 300 kPa.

Other conditions, including the flow rate of the electrolyte per electrode compartment, may be controlled as appropriate according to the each element of the bipolar electrolyzer for alkaline water electrolysis.

(Hydrogen production method)

The hydrogen production method according to the present embodiment includes performing electrolysis of water containing alkali with an electrolyzer to produce hydrogen, and may be carried out using the bipolar electrolyzer, the electrolysis device, and the water electrolysis method according to the present embodiment.

The electrolyzer includes a plurality of combinations of an anode, a cathode, and a membrane disposed between the anode and the cathode, wherein the at least one of the anode or the cathode is a porous electrode having an average pore size of 10 nm or more and 200 nm or less, and the membrane is a porous membrane containing inorganic particles having an average primary grain size of 20 nm or more and 300 nm or less.

Details of the bipolar electrolyzer, the electrolysis device, and the water electrolysis method according to the present embodiment are as described above.

Although the bipolar electrolyzer for alkaline water electrolysis, the alkaline water electrolysis device, and the alkaline water electrolysis method according to the embodiment of the present disclosure have been described above with reference to the accompanying drawings.

EXAMPLES

Although the present disclosure will be described hereinafter in more detail with reference to Examples in the following.

Electrodes (anodes and cathodes) and membranes used in Examples and Comparative Examples were fabricated as follows.

[Example 1]

(Anode)

A porous electrode was fabricated in the following procedure and was used as an anode for Example 1.

A suspension was prepared by mixing and stirring 100 parts by mass of nickel oxide power having a grain size of 0.1-2.0 μm, 1.50 parts by mass of gum arabic, 0.7 parts by mass of arboxymethyl cellulose, 0.001 parts by mass of sodium lauryl sulfate, and 100 parts by mass of water. From the suspension, granules having a grain size of 2-10 μm were prepared using a spray-drying granulator.

The granulated product was sprayed to the both sides of an electrically conductive substrate by plasma thermal spraying. As the electrically conductive substrate, a nickel expanded substrate that had been subjected to blasting was used. The substrate had a center-to-center distance in the long way of mesh (LW) of 4.5 mm, and a center-to-center distance in the short-hand direction of the substrate mesh (SW) of 3.2 mm. The thickness of the substrate was 1 mm. In the plasma thermal spraying, a mixed gas of argon and nitrogen with a ratio of 1:0.8 was used as plasma gas. The precursor for a catalyst layer coating the front surface of the electrically conductive substrate was prepared to a thickness of 240 μm. The precursor for the catalyst layer coating the rear surface of the electrically conductive substrate was prepared to a thickness of 160 μm.

This electrically conductive substrate was placed in a quartz tube. This quartz tube was loaded to a tube furnace, and the precursor for the catalyst layer was reduced by continuously supplying a hydrogen stream into the quartz tube for 2 hours while maintaining the temperature inside the quartz tube at 200°C. In the steps described above, a porous electrode including the electrically conductive substrate and the catalyst layer coating the electrically conductive substrate was obtained. This anode is referred to as "Anode 1" in the following description and Table 1.

(Cathode)

An electrode was fabricated in the following procedure and was used as a cathode for Example 1.

A plain weave mesh substrate of nickel thin wires of a diameter of 0.15 mm woven into #40 mesh was used as the electrically conductive substrate. It was blasted with alumina powder of a weight average grain size of 100 $\mu$m or less, and was then subjected to an acid treatment in 6N hydrochloric acid at room temperature for 5 minutes, followed by washing with water and drying.

Next, palladium nitrate solution (manufactured by Tanaka Kikinzoku Kogyo K.K., palladium concentration: 100 g/L) and dinitrodiammine platinum nitric acid solution (manufactured by Tanaka Kikinzoku Kogyo K.K., platinum concentration: 100 g/L) were mixed such that the molar ratio of palladium : platinum was 1:1, to prepare a first coating liquid.

A tray containing the first coating liquid was placed on the bottom of an EPDM spreader roll, for making the spreader roll to be impregnated with the coating liquid. The roll was placed such that the roll and the coating liquid remained contacting at the upper portion thereof, and a PVC roller was placed to apply the coating liquid on the electrically conductive substrate (roll method). Before the coating liquid dried, this electrically conductive substrate was passed between two EPDM sponge rolls swiftly, to absorb and remove extra coating liquid stayed in crossings in the mesh of the electrically conductive substrate. Then a coating was formed by drying at 50°C for 10 minutes, and that coating was thermolysized by baking it at 500°C for 10 minutes in a muffle furnace. The cycle of roll application, drying, and thermolysis was repeated twice to form a first layer.

Next, chloroiridic acid solution (manufactured by Tanaka Kikinzoku Kogyo K.K., iridium concentration: 100 g/L) and dinitrodiammine platinum nitric acid solution (manufactured by Tanaka Kikinzoku Kogyo K.K., platinum concentration: 100 g/L) was mixed such that the molar ratio of iridium : platinum was 0.73:0.27, to prepare a second coating liquid. In the manner similar to the first layer, a second coating liquid was applied on the substrate having the first layer formed thereon, dried and thermolysized. This was repeated twice at drying temperature of 50°C, and a thermolysis temperature of 500°C, to form a second layer. A post-heating was carried out in an air atmosphere at 500°C for 1 hour to fabricate a cathode. This cathode is referred to as "Cathode 1" in the following description and as "Cath. 1" in Table 1.

(Membrane)

A porous membrane was fabricated in the following procedure and was used as a membrane for Example 1.

In a 1000-mL ball mill pot containing 1 kg of SUS balls with a diameter of 0.5 mm, 135 g of zirconium oxide ("EP zirconium oxide" available from Daiichi Kigenso Kagaku Kogyo Co., Ltd.) and 240 g of N-methyl-2-pyrrolidone (available from Wako Pure Chemical Industries, Ltd.) were placed. They were stirred so as to be dispersed at a rotation speed of 70 rpm at an ambient temperature of 25°C for 3 hours to obtain a mixture. The resultant mixture was filtered through a stainless steel sieve (of #30 mesh) to remove the balls from the mixture. To the mixture were added 60 g of polysulfone (Udel® available from Solvay Advanced Polymers) and 18 g of polyvinylpyrrolidone (having a weight average molecular weight (Mw) of 900000 and available from Wako Pure Chemical Industries, Ltd.), which were dissolved by stirring at 60°C for 12 hours using a three-one motor, giving a coating liquid having the following material composition.

Polysulfone: 20 parts by mass
Polyvinylpyrrolidone: 6 parts by mass
N-methyl-2-pyrrolidone: 80 parts by mass
Zirconium oxide: 45 parts by mass

This coating liquid was applied to both surfaces of a substrate, which was a polyphenylene sulfide mesh (available from Clever Co., Ltd. and having a thickness of 280 $\mu$m, a mesh opening of 358 $\mu$m, and a wire diameter of 150 $\mu$m), by means of a comma coater so that the coating thickness would be 150 $\mu$m on each surface of the substrate. Immediately after the application, the substrate having the coating liquid applied thereon, was exposed to vapor from a coagulation bath storing a 40°C pure water/isopropanol mixture (available from Wako Pure Chemical Industries, Ltd. and having a pure water/isopropanol ratio of 50/50 (v/v)) for 2 minutes. Immediately after that, the substrate having the coating liquid applied thereon, was immersed in the coagulation bath for 4 minutes. Polysulfone was thus coagulated to form a coating on the surfaces of the substrate. Subsequently, the coating was thoroughly washed with pure water to obtain a porous membrane.

This porous membrane had an average water permeation pore size of 0.3 $\mu$m, a maximum pore size of 1.1 $\mu$m, and a thickness of 560 $\mu$m. The average primary and secondary grain sizes of $ZrO_2$ were 50 nm and 4.0 $\mu$m, respectively. This membrane is referred to as "Membrane 1" in the following description and as "Memb. 1" in Table 1.

[Example 2]

(Anode)

As an anode in Example 2, a porous electrode was used which was made in the similar manner to the anode in Example 1, except that the grain size of nickel oxide power was changed to 0.2-2.0 $\mu$m; the amount of gum arabic was changed to 2.25 parts by mass; the grain size of the granules was changed to 5-50 $\mu$m; and an electrically conductive substrate was changed to a pre-blasted nickel expanded substrate that had a center-to-center distance in the long way of mesh (LW) of 4.5 mm, a center-to-center distance in the short way of mesh (SW) of 3.2 mm, and a thickness of the substrate of 1 mm.
This anode is referred to as "Anode 2" in the following description and Table 1.

(Cathode)

Cathode 1 was used as the cathode for Example 2.

(Membrane)

Membrane 1 was used as a membrane for Example 2.

[Example 3]

(Anode)

As an anode in Example 3, a porous electrode was used which was made in the similar manner to the anode in Example 1, except that the grain size of nickel oxide power was changed to 0.1-1.0 $\mu$m; the amount of gum arabic was changed to 1.00 parts by mass; and an electrically conductive substrate was changed to a pre-blasted nickel punching substrate that had a hole size of 1.2 mm, a hole-to-hole pitch of 1.4 mm, and a thickness of the substrate of 1 mm.
This anode is referred to as "Anode 3" in the following description and Table 1.

(Cathode)

Cathode 1 was used as a cathode for Example 3.

(Membrane)

As a membrane in Example 3, a porous membrane was used which was made in the similar manner to the membrane in Example 1, except that the amount of N-methyl-2-pyrrolidone was changed to 210 g (70 parts by mass); the amount of polysulfone was changed to 45 g (15 parts by mass); the amount of polyvinylpyrrolidone was changed to 24 g (8 parts by mass); and the temperature of the coagulating bath was changed to 30°C.
This porous membrane had an average water permeation pore size of 0.2 $\mu$m, a maximum pore size of 1.1 $\mu$m, a surface pore size of 1.1 $\mu$m, a surface pore size of the rear surface of 0.9 $\mu$m, a thickness of 580 $\mu$m, and a porosity of 43%. The average primary and secondary grain sizes of $ZrO_2$ were 50 $\mu$m and 5.5 $\mu$m, respectively. The water contact angle was 50°. This membrane is referred to as "Membrane 2" in the following description and as "Memb. 2" in Table 1.

[Example 4]

(Anode)

As an anode in Example 4, a porous electrode was used which was made in the similar manner to the anode in Example 1, except that the grain size of nickel oxide power was changed to 0.2-2 $\mu$m; the amount of gum arabic was changed to 2.25 parts by mass; the grain size of the granules was changed to 5-50 $\mu$m; and an electrically conductive substrate was changed to a pre-blasted nickel punching substrate that had a hole size of 9.0 mm, a hole-to-hole pitch of 11.5 mm, and a thickness of the substrate of 1 mm.
This anode is referred to as "Anode 4" in the following description and Table 1.

(Cathode)

Cathode 1 was used as a cathode for Example 4.

(Membrane)

Membrane 2 was used as a membrane for Example 4.

[Example 5]

(Anode)

As an anode in Example 5, a porous electrode was used which was made in the similar manner to the anode in Example 1, except that the grain size of nickel oxide power was changed to 0.2-2.0 $\mu$m; the amount of gum arabic was changed to 2.25 parts by mass; the grain size of the granules was changed to 5-50 $\mu$m; and an electrically conductive substrate was changed to a pre-blasted nickel expanded substrate that had a center-to-center distance in the long way of mesh (LW) of 3.0 mm, a center-to-center distance in the short way of mesh (SW) of 2.0 mm, and a thickness of the substrate of 1 mm.
This anode is referred to as "Anode 5" in the following description and Table 1.

(Cathode)

Cathode 1 was used as a cathode for Example 5.

(Membrane)

Membrane 2 was used as a membrane for Example 5.

[Example 6]

(Anode)

As an anode in Example 6, a porous electrode was used which was made in the similar manner to the anode in Example 1, except that the grain size of nickel oxide power was changed to 0.2-2 $\mu$m; the amount of gum arabic was changed to 2.25 parts by mass; the grain size of the granules was changed to 5-50 $\mu$m; and an electrically conductive substrate was changed to a pre-blasted nickel expanded substrate that had a center-to-center distance in the long way of mesh (LW) of 6.0 mm, a center-to-center distance in the short way of mesh (SW) of 4.0 mm, and a thickness of the substrate of 1 mm.
This anode is referred to as "Anode 6" in the following description and Table 1.

(Cathode)

Cathode 1 was used as a cathode for Example 6.

(Membrane)

Membrane 2 was used as a membrane for Example 6.

[Example 7]

(Anode)

As an anode in Example 7, a porous electrode was used which was made in the similar manner to the anode in Example 1, except that the grain size of nickel oxide power was changed to 0.2-2 $\mu$m; the amount of gum arabic was changed to 2.25 parts by mass; the grain size of the granules was changed to 5-50 $\mu$m; and an electrically conductive substrate was changed to a pre-blasted nickel plain weave mesh substrate in which nickel thin wires of a diameter of 0.40 mm were woven to a mesh with an opening of #9 mesh.
This anode is referred to as "Anode 7" in the following description and Table 1.

(Cathode)

Cathode 1 was used as a cathode for Example 7.

(Membrane)

Membrane 1 was used as a membrane for Example 7.

[Example 8]

(Membrane)

As a membrane in Example 8, a porous membrane was used which was made in the similar manner to the membrane in Example 1, except that the amount of polysulfone was changed to 45 g (15 parts by mass); the amount of polyvinylpyrrolidone was changed to 36 g (12 parts by mass); and the temperature of the coagulating bath was changed to 30°C.

This porous membrane had an average water permeation pore size of 0.8 $\mu$m, a maximum pore size of 2.5 $\mu$m, and a thickness of 480 $\mu$m. The average primary and secondary grain sizes of $ZrO_2$ were 50 nm and 4.0 $\mu$m, respectively. This membrane is referred to as "Membrane 3" in the following description and as "Memb. 3" in Table 1.

(Anode)

Anode 2 was used as an anode for Example 8.

(Cathode)

A porous electrode was fabricated in the following procedure and was used as a cathode for Example 8.

A plain weave mesh substrate of nickel thin wires of a diameter of 0.15 mm woven into #40 mesh was used as the electrically conductive substrate. It was blasted with alumina powder of a weight average grain size 100 $\mu$m or less, then was subjected to an acid treatment in 6N hydrochloric acid at room temperature for 5 minutes, water-wash, and drying.

Next, palladium nitrate solution (manufactured by Tanaka Kikinzoku Kogyo K.K., palladium concentration: 100 g/L), dinitrodiammine platinum nitric acid solution (manufactured by Tanaka Kikinzoku Kogyo K.K., platinum concentration: 100 g/L), and aluminum chloride aqueous solution (manufactured by Aldrich, aluminum concentration: 100 g/L) were mixed such that the molar ratio of palladium : platinum : aluminum was 4:5:1, to prepare a first coating liquid.

A tray containing the first coating liquid was placed on the bottom of an EPDM spreader roll, for making the spreader roll to be impregnated with the coating liquid. The roll was placed such that the roll and the coating liquid remained contacting at the upper portion thereof, and a PVC roller was placed to apply the coating liquid on the electrically conductive substrate (roll method). Before the coating liquid dried, this electrically conductive substrate was passed between two EPDM sponge rolls swiftly, to absorb and remove extra coating liquid stayed in crossings in the mesh of the electrically conductive substrate. Then a coating was formed by drying at 50°C for 10 minutes, and that coating was thermolysized by baking it at 500°C for 10 minutes in a muffle furnace. The cycle of roll application, drying, and thermolysis was repeated twice to form a first layer.

Next, chloroiridic acid solution (manufactured by Tanaka Kikinzoku Kogyo K.K., iridium concentration: 100 g/L) and dinitrodiammine platinum nitric acid solution (manufactured by Tanaka Kikinzoku Kogyo K.K., platinum concentration: 100 g/L) was mixed such that the molar ratio of iridium : platinum was 0.73:0.27, to prepare a second coating liquid. In the manner similar to the first layer, a second coating liquid was applied on the substrate having the first layer formed thereon, dried and thermolysized. This was repeated twice at drying temperature of 50°C, and a thermolysis temperature of 500°C, to form a second layer. A post-heating was carried out in an air atmosphere at 500°C for 1 hour. Finally, an immersion in 0.5 mol/L of sodium hydroxide aqueous solution at 40°C for 1 hour was carried out, to fabricate a cathode as a porous electrode. This cathode is referred to as "Cathode 2" in the following description and as "Cath. 2" in Table 1.

As described above, Cathode 2 was a porous electrode that used, as an electrically conductive substrate, a pre-blasted plain weave mesh substrate of nickel thin wires of a diameter of 0.15 mm woven into #40 mesh (an mesh opening of 0.5 mm), and the average pore size was 160 nm, the surface aperture ratio was 40%, the double layer capacitance was 0.5 F/cm$^2$, and the water contact angle was 13 °.

[Example 9]

(Membrane)

As a membrane in Example 9, a porous membrane was used which was made in the similar manner to the membrane in Example 1, except that zirconium oxide was changed to titanium oxide ("TTO-51 (A)" manufactured by Ishihara Sangyo Kaisha, Ltd.); the amount of polysulfone was changed to 45 g (15 parts by mass); the amount of N-methyl-2-pyrrolidone was changed to 210 g (70 parts by mass); and the temperature of the coagulating bath was changed to 30°C.

This porous membrane had an average water permeation pore size of 0.5 $\mu$m, a maximum pore size of 1.2 $\mu$m, and a thickness of 590 $\mu$m. The average primary and secondary grain sizes of $TiO_2$ were 20 nm and 0.5 $\mu$m, respectively. This membrane is referred to as "Membrane 4" in the following description and as "Memb. 4" in Table 1.

(Anode)

Anode 2 was used as an anode for Example 9.

(Cathode)

Cathode 1 was used as a cathode for Example 9.

[Example 10]

(Membrane)

As a membrane in Example 10, a porous membrane was used which was made in the similar manner to the membrane in Example 1, except that zirconium oxide was changed from "EP zirconium oxide" (manufactured by Daiichi Kigenso Kagaku Kogyo Co., Ltd.) to "SRP-2 zirconium oxide" (manufactured by Daiichi Kigenso Kagaku Kogyo Co., Ltd.); and the amount of polysulfone was changed to 45 g (15 parts by mass).

This porous membrane had an average water permeation pore size of 0.4 $\mu$m, a maximum pore size of 1.3 $\mu$m, and a thickness of 530 $\mu$m. The average primary and secondary grain sizes of $ZrO_2$ were 250 nm and 8.0 $\mu$m, respectively. This membrane is referred to as "Membrane 5" in the following description and as "Memb. 5" in Table 1.

(Anode)

Anode 2 was used as an anode for Example 10.

(Cathode)

Cathode 1 was used as a cathode for Example 10.

[Example 11]

(Anode)

As an anode in Example 11, a porous electrode was used which was made in the similar manner to the anode in Example 1, except that the grain size of nickel oxide power was changed to 0.5-2.5 $\mu$m; the amount of gum arabic was changed to 2.25 parts by mass, and the grain size of the granules was changed to 10-60 $\mu$m.

This anode is referred to as "Anode 8" in the following description and Table 1.

(Cathode)

Cathode 1 was used as a cathode for Example 11.

(Membrane)

Membrane 2 was used as a membrane for Example 11.

[Example 12]

(Cathode)

As a cathode in Example 12, a porous electrode was used which was made in the similar manner to the cathode in Example 8, except that a plain weave mesh substrate of nickel thin wires of a diameter of 0.5 mm woven into #20 mesh was used as an electrically conductive substrate.
This cathode is referred to as "Cathode 3" in the following description and as "Cath. 3" in Table 1.

(Anode)

Anode 2 was used as an anode for Example 12.

(Membrane)

Membrane 2 was used as a membrane for Example 12.

[Example 13]

(Anode)

As an anode in Example 13, a porous electrode was used which was made in the similar manner to the anode in Example 1, except that the grain size of nickel oxide power was changed to 0.2-2.0 $\mu$m; the amount of gum arabic was changed to 2.25 parts by mass; the grain size of the granules was changed to 5-50 $\mu$m; and an electrically conductive substrate was changed to a pre-blasted nickel expanded substrate that had a center-to-center distance in the long way of mesh (LW) of 51.0 mm, a center-to-center distance in the short way of mesh (SW) of 11.0 mm, and a thickness of the substrate of 1 mm.
This anode is referred to as "Anode 9" in the following description and Table 1.

(Cathode)

Cathode 1 was used as a cathode for Example 13.

(Membrane)

Membrane 2 was used as a membrane for Example 13.

[Example 14]

(Membrane)

As a membrane in Example 14, a porous membrane was used which was made in the similar manner to the membrane in Example 1, except that the amount of polysulfone was changed to 9 g (15 parts by mass); the amount of polyvinylpyrrolidone was changed to 9 g (3 parts by mass); and the temperature of the coagulating bath was changed to 30°C.
This porous membrane had an average water permeation pore size smaller than the limit of detection of 0.05 $\mu$m, a maximum pore size of 0.3 $\mu$m, and a thickness of 550 $\mu$m. The average primary and secondary grain sizes of $ZrO_2$ were 50 nm and 4.0 $\mu$m, respectively.
This membrane is referred to as "Membrane 6" in the following description and as "Memb. 6" in Table 1.

(Anode)

Anode 2 was used as an anode for Example 14.

(Cathode)

Cathode 1 was used as a cathode for Example 14.

[Comparative Example 1]

(Anode)

As an anode in Comparative Example 1, a porous electrode was used which was made in the similar manner to the anode in Example 1, except that the grain size of nickel oxide power was changed to 0.1-1.0 $\mu$m, and the amount of gum arabic was changed to 0.50 parts by mass.

This anode is referred to as "Anode 11" in the following description and Table 1.

(Cathode)

Cathode 1 was used as a cathode for Comparative Example 1.

(Membrane)

Membrane 2 was used as a membrane for Comparative Example 1.

[Comparative Example 2]

(Anode)

As an anode in Comparative Example 2, a porous electrode was used which was made in the similar manner to the anode in Example 1, except that the grain size of nickel oxide power was changed to 0.4-3.0 $\mu$m; the amount of gum arabic was changed to 2.00 parts by mass, and the grain size of the granules was changed to 5-80 $\mu$m.

This anode is referred to as "Anode 12" in the following description and Table 1.

(Cathode)

Cathode 1 was used as a cathode for Comparative Example 2.

(Membrane)

Membrane 1 was used as a membrane for Comparative Example 2.

[Comparative Example 3]

(Membrane)

As a membrane in Comparative Example 3, a porous membrane was used which was made in the similar manner to the membrane in Example 1, except that zirconium oxide was changed from "EP zirconium oxide" to "UEP-100 zirconium oxide" (manufactured by Daiichi Kigenso Kagaku Kogyo Co., Ltd.); the amount of N-methyl-2-pyrrolidone was changed to 240 g (80 parts by mass); the amount of polysulfone was changed to 45 g (15 parts by mass); and the temperature of the coagulating bath was changed to 30°C.

This porous membrane had an average water permeation pore size of 0.4 $\mu$m, a maximum pore size of 1.4 $\mu$m, and a thickness of 550 $\mu$m. The average primary and secondary grain sizes of $ZrO_2$ were 15 nm and 0.1 $\mu$m, respectively. This membrane is referred to as "Membrane 11" in the following description and as "Memb. 11" in Table 1.

(Anode)

Anode 2 was used as an anode for Comparative Example 3.

(Cathode)

Cathode 1 was used as a cathode for Comparative Example 3.

[Comparative Example 4]

(Membrane)

As a membrane in Comparative Example 4, a porous membrane was used which was made in the similar manner to the membrane in Example 1, except that zirconium oxide was changed from "EP zirconium oxide" to "UEP-100 zirconium oxide" (manufactured by Daiichi Kigenso Kagaku Kogyo Co., Ltd.) 45 g (15 parts by mass); the amount of N-methyl-2-pyrrolidone was changed to 120 g (40 parts by mass); polyvinylpyrrolidone was not used; the coating thicknesses on the both sides was changed to 100 $\mu$m; the coagulating bath was changed to that with pure water at 30°C; and the substrate having the coating liquid applied thereon was immersed in the coagulating bath for 4 minutes without having being exposed to a vapor.

The average water permeation pore size of this porous membrane at the front surface was 0.05 $\mu$m or less, and the maximum pore size was 0.3 $\mu$m. In addition, the pore size at the front surface was 0.2 $\mu$m, and the pore size at the rear surface was 0.1 $\mu$m. The thickness was 400 $\mu$m. The porosity was 24%. The average primary and secondary grain sizes of $ZrO_2$ were 5 nm and 0.1 $\mu$m, respectively. The water contact angle was 40°.

This membrane is referred to as "Membrane 12" in the following description and as "Memb. 12" in Table 1.

(Anode)

Anode 2 was used as an anode for Comparative Example 4.

(Cathode)

Cathode 1 was used as a cathode for Comparative Example 4.

[Comparative Example 5]

(Membrane)

As a membrane in Comparative Example 5, a porous membrane was used which was made in the similar manner to the membrane in Example 1, except that zirconium oxide was changed from "EP zirconium oxide" to "RC-100 zirconium oxide" (manufactured by Daiichi Kigenso Kagaku Kogyo Co., Ltd.); the amount of polyvinylpyrrolidone was changed to 48 g (16 parts by mass); and the coagulating bath was changed to that with pure water at 50°C.

The average water permeation pore size of this porous membrane at the front surface was 1.1 $\mu$m, and the maximum pore size was 2.6 $\mu$m. In addition, the pore size at the front surface was 2.3 $\mu$m, and the pore size at the rear surface was 2.1 $\mu$m. The thickness was 500 $\mu$m. The porosity was 70%. The average primary and secondary grain sizes of $ZrO_2$ were 500 nm and 10.5 $\mu$m, respectively. The water contact angle was 25°.

This membrane is referred to as "Membrane 13" in the following description and as "Memb. 13" in Table 1.

(Anode)

Anode 2 was used as an anode for Comparative Example 5.

(Cathode)

Cathode 1 was used as a cathode for Comparative Example 5.

The bipolar electrolyzers and electrolysis systems that were used will be described in the following. The same conditions were used in all of Examples and Comparative Examples except for the electrodes and the membranes described above.

[Bipolar electrolyzer]

Electrolyzers having bipolar zero-gap structures each constituted from an anode terminal element, a cathode terminal element, and four bipolar elements, as illustrated in FIG. 1, were fabricated. The respective anodes, cathodes, and membranes in Examples and Comparative Examples were assembled into the electrolyzers in the similar manner. As for components other than the anodes, cathodes, and membranes, those widely used in this technical field were used.

<Bipolar element>

Bipolar element were formed in a rectangle of 540 mm × 620 mm, and the anodes and cathodes were formed to 500 mm × 500 mm. Those zero-gap bipolar elements were stacked sandwiching membranes of 525 mm × 525 mm therebetween, to fabricate zero-gap structures in which the cathodes and the anodes were pressed against the membranes.

[Electrolysis system]

Each of the above bipolar electrolyzer was installed in an electrolysis device 70 illustrated in FIG. 2, and was used for alkaline water electrolysis. Hereinafter, the outline of the electrolysis system will be explained with reference to FIG. 2.

A 30% KOH aqueous solution is sealed as the electrolyte in each gas-liquid separation tank 72 and in the bipolar electrolyzer 50. The electrolyte is caused by the tubing pump 71 to circulate through the anode compartments 5a of the bipolar electrolyzer 50 and the gas-liquid separation tank for anode (oxygen separation tank 72o), and through the cathode compartments 5c of the bipolar electrolyzer 50 and the gas-liquid separation tank for cathode (hydrogen separation tank 72h). The flow rate of the electrolytic solution was measured by the flow meters 77 and was adjusted to 200 L/min, and the temperature was adjusted at 90°C by the heat-exchanger 79.

From the rectifier 74, current was supplied at a predetermined electrode density to a cathode and an anode in each electrolytic cell.

The pressure in the cells after the start of energization was measured with each pressure gauge 78 and adjusted so that the cathode-side pressure was 50 kPa and the oxygen-side pressure was 49 kPa. The pressure adjustment was carried out by installing a pressure control valve 80 downstream to each pressure gauge 78.

The rectifier 74, the oxygen concentration meter 75, the hydrogen concentration meter 76, the flow meters 77, the pressure gauges 78, the heat-exchanger 79, the tubing pump 71, the gas-liquid separation tanks 72 (72h and 72o), and the water replenisher 73 were all those commonly used in the technical field.

[Measurement and evaluation methods of properties]

Hereinafter, the method for measuring and evaluating the properties of the electrodes and membranes of interest will be described.

Since the electrodes of interest used in Examples and Comparative Examples had catalyst layers formed on the substrates, the surface properties thereof originated from the catalyst layers.

(1) Average pore size at electrode

The average pore size of an electrode catalyst layer was measured by the BET method. A measurement sample was placed in a dedicated cell and subjected to pretreatment through vacuum evacuation by heating to remove adsorbates on pore surfaces in advance. Then, the adsorption/desorption isotherm of gas adsorption to the measurement sample was measured at -196°C. The average pore size of the measurement sample was obtained from analysis of the obtained adsorption/desorption isotherm by the BET method

(2) Surface aperture ratio of electrode

The surface aperture ratio of an electrode catalyst layer was measured using a scanning electron microscope (SEM; "Miniscope TM3000" available from Hitachi High-Technologies Corporation).

The electrode, together with a core material, was cut into a given-sized piece, and the piece of the electrode was used as a sample for the SEM observation. This sample was set to the observation sample stage of the SEM to start the measurement. The electrode as a measurement sample was set such that an SEM observation could be made in the direction orthogonal to the electrode surface to be observed. The magnitude of the SEM was adjusted (preferably to × 10000 or higher), and an image was captured and the captured screen image was stored. The obtained image was binarized using an image analysis software ("WinROOF" available from MITANI Corporation), and the proportion of the pore area to the surface area of the electrode was calculated to be used as the surface aperture ratio (%).

(3) Water contact angle to electrode

A water contact angle to a porous electrode was measured using "Drop Master DM-701" (available from Kyowa Interface Science Co., Ltd.). The water contact angle was measured by the θ/2 method by dropping 3 μL of pure water

on the surface of the measurement sample (porous electrode). The measurement atmosphere conditions were: the temperature was 23°C and the humidity was 65% RH.

(4) Double layer capacitance of electrode

The double layer capacitance of an electrode was measured by an electrochemical impedance method. The double layer capacitance was calculated by analyzing a Cole-Cole plot where the real parts and the imaginary parts obtained by the AC impedance measurement were plotted, with equivalent circuit fitting.

(5) Average water permeation pore size of membrane

The average water permeation pore size of a membrane was obtained as the one measured by the following procedure using an integrity testing system ("Sartocheck Junior BP-Plus" available from Sartorius Stedim Japan K.K.). First, a membrane, together with a core material, was cut into a given-sized piece as a sample. This sample was set in a pressure-resistant vessel for measurements (area of transparent section: 12.57 cm$^2$), and the vessel was filled with pure water. Next, the pressure-resistant vessel was placed in a thermostatic chamber set at 90°C, and a measurement was started after the interior of the pressure-resistant holder reached 90°C. After the measurement was started, the front of the sample was pressurized with nitrogen. The values of the pressure and the permeation flow rate at which pure water permeated through the sample from its back were recorded. The average water permeation pore size was determined by the following Hagen-Poiseuille equation using the gradient of the pressures versus the water permeation flow rates at pressures between 10 kPa and 30 kPa:

$$\text{Average water permeation pore size (m)} = \{32\eta L\mu_0 \: / \: (\varepsilon P)\}^{0.5}$$

where $\eta$ is the viscosity (Pa·S) of water, L is the thickness (m) of the membrane, and $\mu_0$ is an apparent flow rate calculated by the equation: $\mu_0$ (m/s) = flow rate (m$^3$/s) / flow passage area (m$^2$). In addition, $\varepsilon$ is the porosity and P is the pressure (Pa).

(6) Maximum pore size of membrane

The maximum pore size of the membrane was measured by the following procedure using the integrity testing system ("Sartocheck Junior BP-Plus" available from Sartorius Stedim Japan K.K.). First, a membrane, together with a core material, was cut into a given-sized piece as a sample. This sample was wet with pure water to impregnate the pores in the porous membrane with pure water, and was set to a pressure-resistant vessel for measurements. Next, the pressure-resistant vessel was placed in a thermostatic chamber set to a predetermined temperature, and a measurement was initiated after the interior of the pressure-resistant vessel reached the predetermined temperature. After the measurement was started, the front of the sample was pressurized with nitrogen. The nitrogen pressure at which gas bubbles began to continuously emerge on the back of the sample at a rate of 150 mL/m was determined as a bubble point. The maximum pore size was determined by the following bubble point equation which is a modification of the Young-Laplace equation:

$$\text{Maximum pore size (m)} = 4\gamma\cos\theta \: / \: P$$

where $\gamma$ is the surface tension (N/m) of water, $\cos\theta$ is the contact angle (rad) between the membrane surface and water, and P is the bubble point pressure (Pa).

(7) Average primary grain size of inorganic particles

The average primary grain size of a porous membrane was measured using the scanning electron microscope (SEM; "Miniscope TM3000" available from Hitachi High-Technologies Corporation). First, a membrane, together with a core material, was cut into a given-sized piece as a sample. This sample was subjected to metal coating using a magnetron sputtering system ("MSP-1S" available from Shinkuu Device Co., Ltd) for 1 minute. Next, this sample was set to the observation sample stage of the SEM to start the measurement. The membrane as a measurement sample was set such that an SEM observation could be made in the direction orthogonal to the membrane surface to be observed. After a measurement was initiated, the magnitude of the SEM was adjusted (preferably to ×20000 or higher) such that inorganic particles to be observed were visible, and an image was captured and the captured screen image was stored.

The obtained image was binarized using the image analysis software ("WinROOF" available from MITANI Corporation), an absolute maximum length of each of 10 non-coagulated inorganic particles was measured, and the number-average of the maximum lengths was determined. This average was used as the primary grain size of the inorganic particles.

(8) Average secondary grain size of inorganic particles

The average secondary grain size of inorganic particles was determined using a laser diffraction/scattering particle size distribution analyzer ("LA-950" available from HORIBA, Ltd.).

The polymer resin constituting the porous membrane was dissolved away from the membrane for alkaline water electrolysis by using N-methyl-2-pyrrolidone as a solvent. The remaining inorganic particles were repeatedly washed 3 or more times with N-methyl-2-pyrrolidone in an amount of 1000 or more times the weight of the inorganic particles. The washed inorganic particles were placed into an ultrasonic cleaning bath containing ion-exchange water. The zirconium oxide was exposed to ultrasonic waves for 1 minute while being stirred and circulated in the washing tank. This was followed by gentle stirring for removal of air for 1 minute to obtain a sample. The average secondary grain size of the inorganic particles as a sample was measured as follows. The average secondary grain size was determined from a volume distribution determined by laser diffraction/scattering conducted in ranges of the transmission intensity of a red laser (wavelength: 655 nm) from 80% to 90% and the transmission intensity of a blue LED (wavelength: 405 nm) from 70% to 90%. The refractive index of water was assumed to be 1.33, and the refractive index of zirconium oxide was assumed to be 2.4.

(9) Surface aperture ratio of membrane

The surface aperture ratio of a membrane was measured using the scanning electron microscope (SEM; "Miniscope TM3000" available from Hitachi High-Technologies Corporation).

Before the observation under the SEM, inorganic particles on the membrane were removed using a table-top ultrasonic cleaner ("BRANSONIC Model 5800" available from BRANSON). First, 3 L of pure water was poured into the table-top ultrasonic cleaner, and 500 mL of pure water was poured into a PP (polypropylene) disposable cup intended for 500 mL. The disposable cup was placed on the center of the cleaner, which was powered on and operated until the water temperature reached 30°C. An 8-cm-square sample cut out from the membrane was placed upright in the disposable cup and then subjected to ultrasonic cleaning for 1 minute. The surface of the sample taken out of the cup was washed with pure water contained in a wash bottle. The washed sample was allowed to dry in a dryer set at 50°C for 12 hours or longer, which was cut, together with a core material, into a given-sized piece as a sample. This sample was subjected to metal coating using the magnetron sputtering system ("MSP-1S" available from Shinkuu Device Co., Ltd) for 1 minute.

Next, this sample was set to the observation sample stage of the SEM to start the measurement. The membrane as a measurement sample was set such that an SEM observation could be made in the direction orthogonal to the membrane surface to be observed. After a measurement was initiated, the magnification of the SEM was adjusted such that 100 or more and 400 or less pores present in the observed surface of the porous membrane were seen in the field of view to be measured, and an image was captured and the captured screen image was stored. The obtained image was binarized using the image analysis software ("WinROOF" available from MITANI Corporation), and the proportion of areas of pores having absolute maximum lengths of 0.5 $\mu$m or more to the observed area, was calculated, for each of the observed pores. The direction of the SEM observation was orthogonal to the observed surface of the membrane. Openings which were continuously surrounded by the resin were considered as "pores". An opening a part of which was out of the measurement field of view was not considered as a "pore".

(10) Water contact angle to membrane

The water contact angle to a membrane was measured according the method of measuring the water contact angle to the electrode catalyst layer (above (3)) except that the targets to be measured were the membranes.

(11) Porosity of membrane

The porosity of a membrane was measured using an electronic precision balance. The membrane was cut into three pieces with a size of 3 cm $\times$ 3 cm (9 cm$^2$), and the thicknesses d thereof were measured with a thickness gauge. These measurement samples were immersed in pure water for 24 hours, and the respective weights w1 (g) were measured after removing extra water. Subsequently, they were allowed to dry in a dryer set at 50°C for 12 hours or longer, and the weights w2 (g) were then measured. The water contact surface of the membrane to be measured had a low water absorbency, and thus the thickness and the area of the sample containing water did not significantly change from those of the dried sample. Therefore, the thickness d and the area were assumed as constants, and the porosity was determined from the values of wl, w2, and d:

$$\text{Porosity } \varepsilon \ (\%) = \{(w1 - w2) \ / \ (d \times 9)\} \ \times 100.$$

The values of the porosity were determined for the three samples, and the arithmetic average of the resultant values was employed for the calculation of the porosity (in the above (5)).

[Electrolysis test]

Alkaline water electrolysis was conducted in the configurations of the electrolyzers of Examples 1-16 and Comparative Examples 1-4 by continuously energizing for 24 hours under a high current density of 10 kA/m$^2$. After 24 hours, the average of the pair voltages of the four electrolysis cells were calculated for each of Examples and Comparative Examples, and were evaluated as the cell voltage (v).

In addition, gases were sampled from the gas-liquid separation tanks on the cathode and anode sides, and hydrogen concentration (%) on the cathode side and the oxygen concentration (%) on the anode side were measured with gas chromatography and evaluated as the hydrogen purity (%) and the oxygen purity (%), respectively. The results are listed in Table 1.

Table 1

| | | Examples | | | | | | | | | | | | | | | Comparative Examples | | | | |
|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 | 4 | 5 |
| Bipolar electrolyzers | Electrode | Electrode of interest | Anode 1 | Anode 2 | Anode 3 | Anode 4 | Anode 5 | Anode 6 | Anode 7 | Anode 2 | Anode 2 | Anode 2 | Anode 8 | Cath. 3 | Anode 9 | Anode 2 | Anode 11 | Anode 12 | Anode 2 | Anode 2 | Anode 2 |
| | | Avg pore size (nm) | 60 | 160 | 20 | 160 | 160 | 160 | 140 | 160 | 160 | 160 | 200 | 180 | 160 | 160 | 5 | 250 | 160 | 160 | 160 |
| | | Surface open ratio (%) | 55 | 40 | 31 | 40 | 40 | 40 | 70 | 40 | 40 | 40 | 55 | 40 | 40 | 40 | 25 | 60 | 40 | 40 | 40 |
| | | Double layer cap. (F/cm²) | 3.3 | 1.7 | 3.6 | 1.7 | 2.1 | 1.5 | 1.5 | 1.7 | 1.7 | 1.7 | 1.2 | 0.7 | 0.6 | 1.7 | 0.4 | 4.2 | 1.7 | 1.7 | 1.7 |
| | | Water contact angle (°) | 13 | 10 | 14 | 14 | 14 | 14 | 20 | 10 | 10 | 10 | 12 | 13 | 13 | 10 | 25 | 8 | 10 | 10 | 10 |
| | | Shape of substrate | EM | EM | PM | PM | EM | EM | PW | EM | EM | EM | EM | PW | EM | EM | EM | EM | EM | EM | EM |
| | | LW (mm) | 4.5 | 4.5 | - | - | 3.0 | 6.0 | - | 4.5 | 4.5 | 4.5 | 4.5 | - | 51.0 | 4.5 | 4.5 | 4.5 | 4.5 | 4.5 | 4.5 |
| | | SW (mm) | 3.2 | 3.2 | - | - | 2.0 | 4.0 | - | 3.2 | 3.2 | 3.2 | 3.2 | - | 11.0 | 3.2 | 3.2 | 3.2 | 3.2 | 3.2 | 3.2 |
| | | D (mm) | - | - | 1.2 | 9.0 | - | - | - | - | - | - | - | - | - | - | - | - | - | - | - |
| | | P (mm) | - | - | 1.4 | 11.5 | - | - | - | - | - | - | - | - | - | - | - | - | - | - | - |
| | | Mesh opening (mm) | - | - | - | - | - | - | 2.4 | - | - | - | - | 0.8 | - | - | - | - | - | - | - |
| | | Pair electrode | Cath. 1 | Cath. 1 | Cath. 1 | Cath. 1 | Cath. 1 | Cath. 1 | Cath. 1 | Cath. 2 | Cath. 1 | Cath. 1 | Cath. 1 | Anode 2 | Cath. 1 | Cath. 1 | Cath. 1 | Cath. 1 | Cath. 1 | Cath. 1 | Cath. 1 |
| | Membrane | Type | Memb.1 | Memb.1 | Memb.2 | Memb.2 | Memb.2 | Memb.2 | Memb.1 | Memb.3 | Memb.4 | Memb.5 | Memb.2 | Memb.2 | Memb.2 | Memb.6 | Memb.2 | Memb.1 | Memb.11 | Memb.12 | Memb.13 |
| | | Avg water permeation pore size (μm) | 0.3 | 0.3 | 0.2 | 0.2 | 0.2 | 0.2 | 0.3 | 0.8 | 0.5 | 0.4 | 0.2 | 0.2 | 0.2 | <0.05 | 0.2 | 0.3 | 0.4 | ≤0.05 | 1.1 |
| | | Maximum pore size (μm) | 1.1 | 1.1 | 1.1 | 1.1 | 1.1 | 1.1 | 1.1 | 2.5 | 1.2 | 1.3 | 1.1 | 1.1 | 1.1 | 0.3 | 1.1 | 1.1 | 1.4 | 0.3 | 2.6 |
| | | Hydrophilicity Inorganic particles | ZrO2 | ZrO₂ | ZrO₂ | ZrO₂ | ZrO₂ | ZrO₂ | ZrO₂ | ZrO₂ | TiO₂ | ZrO₂ | ZrO₂ | ZrO₂ | ZrO₂ | ZrO₂ | ZrO₂ | ZrO₂ | ZrO₂ | ZrO₂ | ZrO₂ |
| | | Inorganic particles Avg primary grain size (nm) | 50 | 50 | 50 | 50 | 50 | 50 | 50 | 50 | 20 | 250 | 50 | 50 | 50 | 50 | 50 | 50 | 15 | 5 | 500 |
| | | Inorganic particles Avg secondary grain size (μm) | 4.0 | 4.0 | 5.5 | 5.5 | 5.5 | 5.5 | 4.0 | 4.0 | 0.5 | 8.0 | 5.5 | 5.5 | 5.5 | 4.0 | 5.5 | 4.0 | 0.1 | 0.1 | 10.5 |
| | | Surface opening ratio (%) | 30 | 30 | 30 | 30 | 30 | 30 | 30 | 40 | 25 | 45 | 30 | 30 | 30 | 15 | 30 | 30 | 15 | 15 | 85 |
| | | Water cont angle (°) | 50 | 50 | 50 | 50 | 50 | 50 | 50 | 55 | 40 | 65 | 50 | 50 | 50 | 50 | 50 | 40 | 40 | 40 | 25 |
| Electrolysis performances | Electrolysis test results | Cell voltage (V) | 1.97 | 1.95 | 2.00 | 2.04 | 1.99 | 1.98 | 2.04 | 1.98 | 2.06 | 2.07 | 2.05 | 2.07 | 2.18 | 2.19 | 2.60 | 2.60 | 2.43 | 2.43 | 2.36 |
| | | H conc. (%) | 99.7 | 99.9 | 99.3 | 99.5 | 99.8 | 99.8 | 99.6 | 99.6 | 99.6 | 99.5 | 99.8 | 99.7 | 98.6 | 99.0 | 97.7 | 96.8 | 95.5 | 94.5 | 93.2 |
| | | O conc. (%) | 99.6 | 99.9 | 99.1 | 99.4 | 99.7 | 99.7 | 99.4 | 99.5 | 99.4 | 99.2 | 99.7 | 99.5 | 98.5 | 98.9 | 97.4 | 96.6 | 95.7 | 95.1 | 94.4 |

Forms of substrate   PM: Punching   EM: Expanded   PW: Plain weave mesh

33

## EP 3 575 442 B1

INDUSTRIAL APPLICABILITY

In accordance with the present disclosure, provided are a bipolar electrolyzer and a hydrogen production method which can maintain a superior electrolysis efficiency and higher purities of generated gases even during high current density operations and variable power source operations.

REFERENCE SIGNS LIST

| | |
|---|---|
| 2 | Electrode |
| 2a | Anode |
| 2c | Cathode |
| 7 | Gasket |
| 50 | Bipolar electrolyzer |
| 51g | Fast head/loose head |
| 51i | Insulation plate |
| 51a | Anode terminal element |
| 51c | Cathode terminal element |
| 51r | Tie rod |
| 60 | Bipolar element |
| 65 | Electrolysis cell |
| 70 | Electrolysis device |
| 71 | Tubing pump |
| 72 | Gas-liquid separation tank |
| 72h | Hydrogen separation tank |
| 72o | Oxygen separation tank |
| 73 | Water replenisher |
| 74 | Rectifier |
| 75 | Oxygen concentration meter |
| 76 | Hydrogen concentration meter |
| 77 | Flow meter |
| 78 | Pressure meter |
| 79 | Heat-exchanger |
| 80 | Pressure control valve |
| SW | Center-to-center distance in short-hand direction of mesh |
| LW | Center-to-center distance in long-hand direction of mesh |
| C | Mesh opening |
| TE | Thickness of mesh |
| B | Bond length of mesh |
| T | Plate thickness |
| W | Feed width (Step width) |
| A | Mesh opening of plain weave mesh structure |
| d | Wire diameter of plain weave mesh structure |
| D | Hole size of punching structure |
| P | Hole-to-hole pitch of punching structure |

**Claims**

1. A bipolar electrolyzer for alkaline water electrolysis being a bipolar electrolyzer comprising:

   a plurality of combinations of an anode, a cathode, and a membrane disposed between the anode and the cathode,
   wherein at least one of the anode or the cathode is a porous electrode having an average pore size, determined as described in the description, of 10 nm or more and 200 nm or less, and
   the membrane is a porous membrane containing inorganic particles having an average primary grain size, determined as described in the description, of 20 nm or more and 300 nm or less.

**2.** The bipolar electrolyzer for alkaline water electrolysis according to claim 1, wherein the inorganic particles contained in the membrane have the average primary grain size, determined as described in the description, of 50 nm or more and 180 nm or less.

**3.** The bipolar electrolyzer for alkaline water electrolysis according to claim 1 or 2, wherein the porous electrode comprises a substrate and a catalyst layer formed on a surface of the substrate.

**4.** The bipolar electrolyzer for alkaline water electrolysis according to claim 3, wherein the porous electrode comprises the substrate in a net structure and the catalyst layer containing Ni.

**5.** The bipolar electrolyzer for alkaline water electrolysis according to any one of claims 1 to 4, wherein the porous electrode has a double layer capacitance, determined as described in the description, of 0.5 $F/cm^2$ or more and 4.0 $F/cm^2$ or less.

**6.** The bipolar electrolyzer for alkaline water electrolysis according to any one of claims 1 to 5, wherein the water contact angle to the porous electrode, determined as described in the description, is more than 0° and 30° or less.

**7.** The bipolar electrolyzer for alkaline water electrolysis according to any one of claims 1 to 6, wherein the porous electrode has a surface aperture ratio, determined as described in the description, of 30% or more and 80% or less.

**8.** The bipolar electrolyzer for alkaline water electrolysis according to any one of claims 3 to 7, wherein the porous electrode comprises a plain weave mesh substrate having a mesh opening, determined as described in the description, of 0.2 mm or more and 4.0 mm or less.

**9.** The bipolar electrolyzer for alkaline water electrolysis according to any one of claims 3 to 7, wherein the porous electrode comprises an expanded substrate having a center-to-center distance in the long-way direction of mesh (LW) of 2.0 mm or more and 6.0 mm or less, and a center-to-center distance in the short way of mesh (SW) of 1.0 mm or more and 5.0 mm or less, wherein the "center-to-center distance in the long way of mesh (LW)" refers to the longest distance between the centers of adjacent bonds (mesh crossings), when observed from the direction orthogonal to the plane of the opening, and wherein the "center-to-center distance in the short way of mesh (SW)" refers to the shortest distance between the centers of bonds adjacent in the direction orthogonal to the LW, when observed from the direction orthogonal to the plane of the opening.

**10.** The bipolar electrolyzer for alkaline water electrolysis according to any one of claims 3 to 7, wherein the porous electrode comprises a punching substrate having a hole size (D) of 1.0 mm or more and 10.0 mm or less, and a hole-to-hole pitch (P) of 1.0 mm or more and 12.0 mm,
wherein the "hole size (D)" refers to the diameter when punched holes are perfect circular, or as the average of the major- and the minor-axis diameters when the punched holes are elliptic, and
the "hole-to-hole pitch (P)" refers to the center-to-center distance between one punched hole and the closest punched hole.

**11.** The bipolar electrolyzer for alkaline water electrolysis according to any one of claims 1 to 10, wherein the inorganic particles contained in the membrane have an average secondary grain size, determined as described in the description, of 0.2 $\mu$m or more and 10.0 $\mu$m or less.

**12.** The bipolar electrolyzer for alkaline water electrolysis according to any one of claims 1 to 11, wherein the inorganic particles contained in the membrane contain zirconium oxide ($ZrO_2$) and/or titanium oxide ($TiO_2$).

**13.** The bipolar electrolyzer for alkaline water electrolysis according to any one of claims 1 to 12, wherein the membrane has an average water permeation pore size, determined as described in the description, of 0.1 $\mu$m or more and 1.0 $\mu$m or less

**14.** The bipolar electrolyzer for alkaline water electrolysis according to any one of claims 1 to 13, wherein the membrane has a maximum pore size, determined as described in the description, of 0.5 $\mu$m or more and 3.0 $\mu$m or less

**15.** The bipolar electrolyzer for alkaline water electrolysis according to any one of claims 1 to 14, wherein the membrane has a surface aperture ratio, determined as described in the description, of 20% or more and 80% or less.

16. The bipolar electrolyzer for alkaline water electrolysis according to any one of claims 1 to 15, wherein the water contact angle to the membrane, determined as described in the description, is 30° or more and 90° or less.

17. The bipolar electrolyzer for alkaline water electrolysis according to any one of claims 1 to 16, wherein the anode, the cathode, and the membrane define a zero-gap structure.

18. A hydrogen production method for producing hydrogen by electrolyzing water containing an alkali in the bipolar electrolyzer as defined in any of claims 1 to 17.

**Patentansprüche**

1. Bipolarer Elektrolyseur für alkalische Wasserelektrolyse, umfassend:

   eine Vielzahl von Kombinationen aus einer Anode, einer Kathode und einer Membran, die sich zwischen der Anode und der Kathode befindet;
   wobei die Anode und/oder die Kathode eine poröse Elektrode ist, die eine mittlere Porengröße, welche so bestimmt wird, wie es in der Beschreibung beschrieben ist, von 10 nm oder mehr und 200 nm oder weniger aufweist; und
   die Membran eine poröse Membran ist, die anorganische Teilchen enthält, welche eine mittlere Primärkorngröße, die so bestimmt wird, wie es in der Beschreibung beschrieben ist, von 20 nm oder mehr und 300 nm oder weniger aufweisen.

2. Bipolarer Elektrolyseur für alkalische Wasserelektrolyse gemäß Anspruch 1, wobei die in der Membran enthaltenen anorganischen Teilchen eine mittlere Primärkorngröße, die so bestimmt wird, wie es in der Beschreibung beschrieben ist, von 50 nm oder mehr und 180 nm oder weniger aufweisen.

3. Bipolarer Elektrolyseur für alkalische Wasserelektrolyse gemäß Anspruch 1 oder 2, wobei die poröse Elektrode ein Substrat und eine auf einer Fläche des Substrats gebildete Katalysatorschicht umfasst.

4. Bipolarer Elektrolyseur für alkalische Wasserelektrolyse gemäß Anspruch 3, wobei die poröse Elektrode das Substrat in einer Netzstruktur umfasst und die Katalysatorschicht Ni enthält.

5. Bipolarer Elektrolyseur für alkalische Wasserelektrolyse gemäß einem der Ansprüche 1 bis 4, wobei die poröse Elektrode eine Doppelschichtkapazität, die so bestimmt wird, wie es in der Beschreibung beschrieben ist, von 0,5 F/cm$^2$ oder mehr und 4,0 F/cm$^2$ oder weniger aufweist.

6. Bipolarer Elektrolyseur für alkalische Wasserelektrolyse gemäß einem der Ansprüche 1 bis 5, wobei der Wasserkontaktwinkel zur porösen Elektrode, der so bestimmt wird, wie es in der Beschreibung beschrieben ist, größer als 0° ist und 30° oder weniger beträgt.

7. Bipolarer Elektrolyseur für alkalische Wasserelektrolyse gemäß einem der Ansprüche 1 bis 6, wobei die poröse Elektrode ein Oberflächenöffnungsverhältnis, das so bestimmt wird, wie es in der Beschreibung beschrieben ist, von 30% oder mehr und 80% oder weniger aufweist.

8. Bipolarer Elektrolyseur für alkalische Wasserelektrolyse gemäß einem der Ansprüche 3 bis 7, wobei die poröse Elektrode ein Gewebesubstrat in Leinenbindung mit einer Maschenweite, die so bestimmt wird, wie es in der Beschreibung beschrieben ist, von 0,2 mm oder mehr und 4,0 mm oder weniger umfasst.

9. Bipolarer Elektrolyseur für alkalische Wasserelektrolyse gemäß einem der Ansprüche 3 bis 7, wobei die poröse Elektrode ein gedehntes Substrat mit einem Mittelpunkt-zu-Mittelpunkt-Abstand in der Richtung des langen Wegs der Maschen (LW) von 2,0 mm oder mehr und 6,0 mm oder weniger und einem Mittelpunkt-zu-Mittelpunkt-Abstand auf dem kurzen Weg der Maschen (SW) von 1,0 mm oder mehr und 5,0 mm oder weniger umfasst, wobei sich "Mittelpunkt-zu-Mittelpunkt-Abstand auf dem langen Weg der Maschen (LW)" auf den längsten Abstand zwischen den Mittelpunkten benachbarter Bindungen (Maschenkreuzungen), wenn man aus der Richtung senkrecht zur Ebene der Öffnung beobachtet, bezieht und wobei sich "Mittelpunkt-zu-Mittelpunkt-Abstand auf dem kurzen Weg der Maschen (SW)" auf den kürzesten Abstand zwischen den Mittelpunkten benachbarter Bindungen in der Richtung senkrecht zum LW, wenn man aus der Richtung senkrecht zur Ebene der Öffnung beobachtet, bezieht.

10. Bipolarer Elektrolyseur für alkalische Wasserelektrolyse gemäß einem der Ansprüche 3 bis 7, wobei die poröse Elektrode ein Stanzsubstrat mit einer Lochgröße (D) von 1,0 mm oder mehr und 10,0 mm oder weniger und einem regelmäßigen Loch-zu-Loch-Abstand (P) von 1,0 mm oder mehr und 12,0 mm umfasst, wobei sich "Lochgröße (D)" auf den Durchmesser, wenn ausgestanzte Löcher vollkommen kreisförmig sind, oder auf den Durchschnitt der Durchmesser von Haupt- und Nebenachse, wenn die ausgestanzten Löcher elliptisch sind, bezieht und sich "regelmäßiger Loch-zu-Loch-Abstand (P)" auf den Mittelpunkt-zu-Mittelpunkt-Abstand zwischen einem ausgestanzten Loch und dem nächsten ausgestanzten Loch bezieht.

11. Bipolarer Elektrolyseur für alkalische Wasserelektrolyse gemäß einem der Ansprüche 1 bis 10, wobei die in der Membran enthaltenen anorganischen Teilchen eine mittlere Sekundärkorngröße, die so bestimmt wird, wie es in der Beschreibung beschrieben ist, von 0,2 $\mu$m oder mehr und 10,0 $\mu$m oder weniger aufweisen.

12. Bipolarer Elektrolyseur für alkalische Wasserelektrolyse gemäß einem der Ansprüche 1 bis 11, wobei in der Membran enthaltenen anorganischen Teilchen Zirconiumoxid ($ZrO_2$) und/oder Titanoxid ($TiO_2$) enthalten.

13. Bipolarer Elektrolyseur für alkalische Wasserelektrolyse gemäß einem der Ansprüche 1 bis 12, wobei die Membran eine mittlere Wasserpermeationsporengröße, die so bestimmt wird, wie es in der Beschreibung beschrieben ist, von 0,1 $\mu$m oder mehr und 1,0 $\mu$m oder weniger aufweist.

14. Bipolarer Elektrolyseur für alkalische Wasserelektrolyse gemäß einem der Ansprüche 1 bis 13, wobei die Membran eine maximale Porengröße, die so bestimmt wird, wie es in der Beschreibung beschrieben ist, von 0,5 $\mu$m oder mehr und 3,0 $\mu$m oder weniger aufweist.

15. Bipolarer Elektrolyseur für alkalische Wasserelektrolyse gemäß einem der Ansprüche 1 bis 14, wobei die Membran ein Oberflächenöffnungsverhältnis, das so bestimmt wird, wie es in der Beschreibung beschrieben ist, von 20% oder mehr und 80% oder weniger aufweist.

16. Bipolarer Elektrolyseur für alkalische Wasserelektrolyse gemäß einem der Ansprüche 1 bis 15, wobei der Wasserkontaktwinkel zur Membran, der so bestimmt wird, wie es in der Beschreibung beschrieben ist, 30° oder mehr und 90° oder weniger beträgt.

17. Bipolarer Elektrolyseur für alkalische Wasserelektrolyse gemäß einem der Ansprüche 1 bis 16, wobei die Anode, die Kathode und die Membran eine spaltfreie Struktur definieren.

18. Wasserstoffproduktionsverfahren zur Produktion von Wasserstoff durch Elektrolysieren von Wasser, das ein Alkali enthält, in dem bipolaren Elektrolyseur gemäß einem der Ansprüche 1 bis 17.

**Revendications**

1. Electrolyseur bipolaire pour électrolyse d'eau alcaline étant un électrolyseur bipolaire comprenant :

   plusieurs combinaisons d'une anode, d'une cathode, et d'une membrane disposée entre l'anode et la cathode, dans lequel au moins une de l'anode ou la cathode est une électrode poreuse ayant une taille moyenne de pore, déterminée comme décrit dans la description, de 10 nm ou supérieure et 200 nm ou inférieure, et la membrane est une membrane poreuse contenant des particules inorganiques ayant une taille moyenne de grain primaire, déterminée comme décrit dans la description, de 20 nm ou supérieure et de 300 nm ou inférieure.

2. Electrolyseur bipolaire pour électrolyse d'eau alcaline selon la revendication 1, dans lequel les particules inorganiques contenues dans la membrane présentent la taille moyenne de grain primaire, déterminée comme décrit dans la description, de 50 nm ou supérieure et de 180 nm ou inférieure.

3. Electrolyseur bipolaire pour électrolyse d'eau alcaline selon la revendication 1 ou 2, dans lequel l'électrode poreuse comprend un substrat et une couche de catalyseur formée sur une surface du substrat.

4. Electrolyseur bipolaire pour électrolyse d'eau alcaline selon la revendication 3, dans lequel l'électrode poreuse comprend le substrat dans une structure de réseau et la couche de catalyseur contenant Ni.

5. Electrolyseur bipolaire pour électrolyse d'eau alcaline selon l'une quelconque des revendications 1 à 4, dans lequel l'électrode poreuse présente une capacitance de double couche, déterminée comme décrit dans la description, de 0,5 F/cm$^2$ ou supérieure et de 4,0 F/cm$^2$ ou inférieure.

6. Electrolyseur bipolaire pour électrolyse d'eau alcaline selon l'une quelconque des revendications 1 à 5, dans lequel l'angle de contact d'eau à l'électrode poreuse, déterminé comme décrit dans la description, est supérieur à 0° et de 30° ou inférieur.

7. Electrolyseur bipolaire pour électrolyse d'eau alcaline selon l'une quelconque des revendications 1 à 6, dans lequel l'électrode poreuse présente un taux d'ouverture de surface, déterminé comme décrit dans la description, de 30 % ou supérieur et de 80 % ou inférieur.

8. Electrolyseur bipolaire pour électrolyse d'eau alcaline selon l'une quelconque des revendications 3 à 7, dans lequel l'électrode poreuse comprend un substrat de maillage à armure toile ayant une ouverture de maillage, déterminée comme décrit dans la description, de 0,2 mm ou supérieure et de 4,0 mm ou inférieure.

9. Electrolyseur bipolaire pour électrolyse d'eau alcaline selon l'une quelconque des revendications 3 à 7, dans lequel l'électrode poreuse comprend un substrat expansé ayant une distance centre-à-centre dans la direction de voie longue de maillage (LW) de 2,0 mm ou supérieure et de 6,0 mm ou inférieure, et une distance centre-à-centre dans la voix courte de maillage (SW) de 1,0 mm ou supérieure et de 5,0 mm ou inférieure,
dans lequel la "distance centre-à-centre dans la voie longue de maillage (LW)" fait référence à la distance la plus longue entre les centres de liaisons adjacents (croisements de maillage), lorsqu'elle est observée à partir de la direction orthogonale au plan de l'ouverture, et
dans lequel la "distance centre-à-centre dans la voie courte de maillage (SW)" fait référence à la distance la plus courte entre les centres de liaisons adjacents dans la direction orthogonale à LW, lorsqu'elle est observée à partir de la direction orthogonale au plan de l'ouverture.

10. Electrolyseur bipolaire pour électrolyse d'eau alcaline selon l'une quelconque des revendications 3 à 7, dans lequel l'électrode poreuse comprend un substrat de poinçonnage ayant une taille de perforation (D) de 1,0 mm ou supérieure et de 10,0 mm ou inférieure, et un pas perforation-à-perforation (P) de 0,1 mm ou supérieur et de 12,0 mm,
dans lequel la "taille de perforation (D)" fait référence au diamètre lorsque des perforations poinçonnées sont parfaitement circulaires, ou à la moyenne des diamètres d'axes majeurs et mineurs lorsque les perforations poinçonnées sont elliptiques, et
le pas "perforation-à-perforation (P)" fait référence à la distance centre-à-centre entre une perforation poinçonnée et la perforation poinçonnée la plus proche.

11. Electrolyseur bipolaire pour électrolyse d'eau alcaline selon l'une quelconque des revendications 1 à 10, dans lequel les particules inorganiques contenues dans la membrane présentent une taille moyenne de grain secondaire, déterminée comme décrit dans la description, de 0,2 $\mu$m ou supérieure et de 10,0 $\mu$m ou inférieure.

12. Electrolyseur bipolaire pour électrolyse d'eau alcaline selon l'une quelconque des revendications 1 à 11, dans lequel les particules inorganiques contenues dans la membrane contiennent de l'oxyde de zirconium ($ZrO_2$) et/ou de l'oxyde de titane ($TiO_2$).

13. Electrolyseur bipolaire pour électrolyse d'eau alcaline selon l'une quelconque des revendications 1 à 12, dans lequel la membrane présente une taille moyenne de pore de perméation d'eau, déterminée comme décrit dans la description, de 0,1 $\mu$m ou supérieure et de 1,0 $\mu$m ou inférieure.

14. Electrolyseur bipolaire pour électrolyse d'eau alcaline selon l'une quelconque des revendications 1 à 13, dans lequel la membrane présente une taille maximale de pore, déterminée comme décrit dans la description, de 0,5 $\mu$m ou supérieure et de 3,0 $\mu$m ou inférieure.

15. Electrolyseur bipolaire pour électrolyse d'eau alcaline selon l'une quelconque des revendications 1 à 14, dans lequel la membrane présente un taux d'ouverture de surface, déterminé comme décrit dans la description, de 20 % ou supérieur et de 80 % ou inférieur.

**16.** Electrolyseur bipolaire pour électrolyse d'eau alcaline selon l'une quelconque des revendications 1 à 15, dans lequel l'angle de contact d'eau à la membrane, déterminé comme décrit dans la description, est de 30° ou supérieur et de 90° ou inférieur.

**17.** Electrolyseur bipolaire pour électrolyse d'eau alcaline selon l'une quelconque des revendications 1 à 16, dans lequel l'anode, la cathode, et la membrane définissent une structure à zéro-écartement.

**18.** Procédé de production d'hydrogène pour produire de l'hydrogène par électrolyse d'eau contenant un alcali dans l'électrolyseur bipolaire selon l'une quelconque des revendications 1 à 17.

# FIG. 1

# FIG. 2

# *FIG. 3*

A

LW

2W

W

SW

C

T

B

A

W                T

TE

a cross-sectional view along Line A-A

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4530743 A
- WO 2013191140 A
- JP 2015117417 A
- WO 2016148302 A
- JP 2015183254 A
- US 2016289850 A
- JP 2011117056 A